# EUROPÄISCHE PATENTSCHRIFT

(11) **EP 2 324 326 B1**
(45) Veröffentlichungstag und Bekanntmachung des Hinweises auf die Patenterteilung: **07.08.2019**
(21) Anmeldenummer: 09778369.0
(22) Anmeldetag: 07.09.2009
(51) Int. Cl.: H04L 29/12, H04L 29/08, G01D 4/00

(54) **VERFAHREN UND VERTEILTES SYSTEM ZUM ERMITTELN UND VERWALTEN VON DATEN AUS EINER VIELZAHL VON MESSGERÄTEN**
METHOD AND DISTRIBUTED SYSTEM FOR DETECTING AND MANAGING DATA FROM A PLURALITY OF MEASURING DEVICES
PROCÉDÉ ET SYSTÈME DISTRIBUÉ POUR DÉTERMINER ET GÉRER DES DONNÉES PROVENANT D'UNE PLURALITÉ D'APPAREILS DE MESURE

(30) Priorität: 09.09.2008 DE 102008046450
(43) Veröffentlichungstag der Anmeldung: 25.05.2011
(73) Patentinhaber: Deutsche Telekom AG, 53113 Bonn (DE)
(72) Erfinder: BAUERFELD, Wulfdieter, 14163 Berlin (DE); SCHÖNEBECK, Heiko-Armin, 13156 Berlin (DE)
(74) Vertreter: Braun-Dullaeus Pannen Emmerling Patent- und Rechtsanwaltspartnerschaft mbB
(86) Internationale Anmeldenummer: PCT/EP2009/006475
(87) Internationale Veröffentlichungsnummer: WO 2010/028788

(56) Entgegenhaltungen:
- EP-A2- 0 973 297
- WO-A1-99/46746
- US-A- 6 112 246
- US-A1- 2004 243 524
- US-A1- 2005 262 096

## Beschreibung

Die Erfindung betrifft ein Verfahren und ein verteiltes System zum Verwalten von Daten aus einer Vielzahl von Messgeräten.

### Stand der Technik

Aus der DE 693 19 305 T2 ist ein Kommunikationsnetz mit einer Master-Einheit und mehreren Stave-Einheiten bekannt, wobei die Master-Einheit so beschaffen ist, dass sie Nachrichten an die Steve-Einheiten sendet und von diesen Nachrichten empfängt. Die Aufnahme neu installierter Slave-Einheiten ist beschrieben.

Ein System, bei dem Daten mindestens eines Messgerätes ermittelt, übertragen und mit mehreren Server-Programmen bearbeitet werden, ist aus der WO 03/027840 A1 bekannt.

In der WO 99/46746 A1 ist ein Fernzugriff auf elektronische Messgeräte beschrieben, die als TCP/IP-aktivierte Zähler für Zweiwegezugriff über Lokalbereichsnetzwerke LAN und Weitbereichsnetzwerke WAN ausgebildet sind.

Die US 2004/0243524 A1 offenbart ein System und ein Verfahren, "Online" in "Real-Time" Verbrauchsrechnungen zu erzeugen, zu präsentieren, anzuzeigen und zu bezahlen. Gegenstand der EP 0 973 297 A2 ist eine Netz-basierte Fernverwaltung und Kontrolle eines Messgerätes. Gegenstand der US 2005/0262096 A1 ist ein Servergerät und ein Verfahren, Informationen zu liefern.

Ein System, bei dem Daten aus einer Vielzahl von Messgeräten ermittelt und einer Zentralstation übermittelt und dort bearbeitet werden, ist aus der WO 2008/094277 A1 bekannt. Die Zentralstation umfasst ein Nutzer-Informationssystem und ein Managementmodul, das die Betriebszustände der Messgeräte steuert. Bei einer Steuerung der Betriebszustände der Messgeräte durch ein Managementmodul ist die Anzahl der gleichzeitig steuerbaren Messgeräte begrenzt.

### Erfindung

Es ist wünschenswert, ein Verfahren und ein entsprechendes verteiltes System zum Ermitteln und Verwalten von Daten aus einer Vielzahl von Messgeräten zu entwickein, bei dem die Anzahl der Messgeräte ohne Veränderung der Systemstruktur um ein Vielfaches erhöht werden kann. Insbesondere sollten eine große Anzahl von Messgeräten (ab ca. 10 und eine häufige Übertragung von Messdaten (z.B. alle 15 min) möglich sein.

Diese Aufgabe ist durch ein erfindungsgemäßes Verfahren gemäß Anspruch 1 und ein erfindungsgemäßes verteiltes System gemäß Anspruch 14 gelöst. In den Unteransprüchen sind vorteilhafte Ausführungsformen der Erfindung beschrieben.

Bei einem erfindungsgemäßen Verfahren zum Ermitteln und Verwalten von Daten aus einer Vielzahl von Messgeräten werden Daten in mehreren Messstationen jeweils aus mindestens einem Messgerät Zyklisch ermittelt. Die ermittelten Daten einer Messstation werden in einer Server-Rechnereinheit zu clientfähigen Daten bearbeitet und zur Verfügung gestellt. Die zur Verfügung gestellten Daten aus den Messstationen werden in mindestens einer Clientstation mit mindestens einer Client-Rechnereinheit über ein Kommunikationsnetzwerk abgerufen und weiter bearbeitet.

Ein Messgerät weist einen oder mehrere Sensoren zur Ermittlung von Daten auf. Beispiele sind Verbrauchssensoren für Strom, Gas und Wasser. Ein Messgerät ist zum Beispiel als Stromzähler ausgebildet. Die Messgeräte sind als Zähler mit mindestens einem Sensor und/oder als Geräte mit weiteren Anwendungen, z.B. als Haushaltsgeräte, mit mindestens einem Sensor und ggf. mit mindestens einem Aktor ausgebildet. D.h. als Haushaltsgerät ist ein Messgerät mit weiteren Anwendungen für den häuslichen Bereich bezeichnet. Die Messgeräte, z.B. ihre Betriebszustände, werden durch die Server-Rechnereinheiten gesteuert.

In einer Messstation, z.B. einem Haushalt, befindet sich ein Messgerät oder mehrere Messgeräte in räumlicher Nähe. D.h. eine Messstation umfasst einen häuslichen Bereich, z.B. eines oder weniger Haushalte. Als häuslicher Bereich sind z.B. private Haushalte, Arbeitsstätten oder öffentliche Einrichtungen bezeichnet.

Ein Kommunikationsnetzwerk ist als großräumiges Netzwerk ausgebildet, an dem Teilnehmer auch über große Distanzen angeschlossen sein und miteinander verbunden werden können. Ein Kommunikationsnetzwerk ist vorzugsweise das Internet, d.h. die Daten werden mit Hilfe von Internetprotokollen bis einschließlich Ebene 7 abgerufen, und zwar mit Hilfe von standardisierten Internetprotokollen bis einschließlich Ebene 7.

Eine Server-Rechnereinheit umfasst einen Prozessor und ein Serverprogramm, das Dienste zur Verfügung stellt, die im Betrieb immer abrufbar sind. Eine Einheit aus Prozessor und Serverprogramm wird auch Server genannt. Der in der Server-Rechnereinheit eingesetzte Server ist netzwerkfähig, und zwar, wenn als Kommunikationsnetzwerk das Internet benutzt wird, internetfähig. Die Server-Rechnereinheiten verwalten die aus den Messgeräten ermittelten Daten unter anderem, indem sie diese zu clientfähigen Daten bearbeiten und zur Verfügung stellen.

Die Client-Rechnereinheit weist einen Prozessor und ein Clientprogramm auf, wobei das Clientprogramm geeignet ist, die Dienste eines Serverprogramms abzurufen. Eine Einheit aus Prozessor und Clientprogramm wird auch Client genannt. Der Client der Client-Rechnereinheit ist notwendiger Weise ebenfalls netzwerkfähig, und zwar ggf. internetfähig.

Erfindungsgemäß ist das Clientprogramm der Client-Rechnereinheit geeignet, die Dienste der Serverprogramme aller Server-Rechnereinheiten abzurufen.

Bei dem erfindungsgemäßen Verfahren werden durch eine Client-Rechnereinheit Daten aus einer Vielzahl von Server-Rechnereinheiten abgerufen. Im Gegensatz zu bekannten Server-Client-Modellen, bei denen viele Clients einen Server abfragen, fragt bei dem erfindungsgemäßen Verfahren ein Client viele Server ab. Insbesondere werden ausschließlich Anfragen von diesem Clientprogramm von den Serverprogrammen zugelassen.

Dieses neue Server-Client-Modell wurde in der Prioritätsanmeldung als "invertiertes Server-Client-Modell" und als "invertiertes Client-Server-Modell" bezeichnet. Im Folgenden wird die Bezeichnung "invertiertes Client-Server-Modell" eingesetzt.

Bei einem erfindungsgemäßen Verfahren nach dem invertierten Client-Server-Modell arbeitet eine Client-Rechnereinheit einer Clientstation folgendermaßen:
- die Client-Rechnereinheit initiiert Anfragen, z.B. nach Daten,
- wartet auf und erhält Antworten von den angefragten Server-Rechnereinheiten, erhält ggf. Alarm von entsprechenden Server-Rechnereinheiten und
- interagiert ggf. mit Messgeräten oder weiteren Anwendungen über die entsprechende Server-Rechnereinheit.

Die Server-Rechnereinheiten arbeiten in Verbindung mit der Client-Rechnereinheit folgendermaßen:
- sie stehen in Bereitschaft, d.h. sie initiieren weder Anfragen noch Aktivitäten, sie initiieren jedoch Alarm,
- sie sind am Netzwerk angeschlossen und antworten nur auf Anfragen der Client-Rechnereinheit und
- können über z.B. die Client-Rechnereinheit installiert, deinstalliert, mit aktuellen Versionen von Programmen oder mit neuen Programmen versehen werden.

Wesentlich ist, dass die Server-Rechnereinheiten mit einer Kennung der entsprechenden Client-Rechnereinheit versehen sind und nur auf Anfragen dieser autorisierten Client-Rechnereinheit antworten.

Vorzugsweise wird in jeder Server-Rechnereinheit die Bearbeitung der Daten durch mindestens einen Mikro-Server durchgeführt.

Insbesondere wird in den Server-Rechnereinheiten der in großer Zahl vorhandenen ggf. ähnlichen Messstationen die Bearbeitung der Daten durch mindestens einen Mikro-Server durchgeführt. Einzelne Messstationen können, ggf. zusätzlich, alternative Server aufweisen.

Ein Mikro-Server, der z.B. in einem kleinen elektronischen Bauteil untergebracht ist, führt ggf. zu den oben genannten Arbeitsschritten folgende durch:
- Erfassung von Daten der Messgeräte über unterschiedliche Protokolle und Techniken der Nahfeld-Kommunikation, auch Nahfeld-Telemetrie oder Inhaus-Telemetrie genannt,
- ggf. Steuerung der Messgeräte,
- Bearbeiten der ermittelten Daten, so dass sie netzwerkfähig, d.h. internetfähig, sind.

Ein solcher Mikro-Server erfüllt auch die Funktion eines intermedialen Multi-Utility-Servers, iMUS, auch interaktiver Multi-Utility-Server genannt. Der Einsatz von Mikro-Servern bei einem erfindungsgemäßen Verfahren ermöglicht ein kostengünstiges und komfortables Verfahren nach dem invertierten Client-Server-Modell.

Vorzugsweise werden die Messgeräte und ggf. Zusatzgeräte durch die Mikro-Server gesteuert.

Vorzugsweise werden Daten aus mindestens einem als einfacher Haushaltszähler ausgebildeten Messgerät ermittelt und durch einen Mikro-Server bearbeitet und zur Verfügung gestellt. Bei einem erfindungsgemäßen Verfahren ermöglicht der Einsatz von Mikro-Servern auch den Einsatz einfacher Haushaltszähler. Einfache Haushaltszähler sind z.B. kostengünstige elektronische Haushaltszähler.

In einer Ausführungsform der Erfindung werden Daten aus mindestens einem als Haushaltsgerät ausgebildeten Messgerätes mit mindestens einem Sensor ermittelt und durch einen Mikro-Server bearbeitet und zur Verfügung gestellt.

Neben der Datenermittlung aus Sensoren von Haushaltsgeräten werden in einer Ausführungsform der Erfindung Daten zum Steuern an mindestens ein als Haushaltgerät ausgebildetes Messgerät mit mindestens einem Aktor oder an ein Zusatzgerät mit mindestens einem Aktor durch einen Mikro-Server übermittelt.
D.h. der Einsatz von Mikro-Servern ermöglicht auch eine Datenermittlung aus Sensoren und eine Datenübermittlung an Aktoren von weiteren als Haushaltsgeräte ausgebildeten Messgeräten oder von Zusatzgeräten.

Vorzugweise werden die aus den Messgeräten ermittelten Daten in den Server-Rechnereinheiten bei der Bearbeitung zu clientfähigen Daten als XML-Dokumente erstellt.

Vorzugsweise werden die in den Server-Rechnereinheiten ermittelten Daten verschlüsselt und in der Client-Rechnereinheit entschlüsselt. Dies ermöglicht über z.B. das Internet ein sogenanntes Virtual Private Network VPN zu legen und damit eine sichere Kommunikation zwischen der Client-Rechnereinheit und den Server-Rechnereinheiten zu ermöglichen.

Eine Alternative einer Verschlüsselung und damit einer sicheren Kommunikation, die der Funktionalität eines Virtual Private Network VPN entspricht, erfolgt z.B. folgendermaßen: Anfragen werden ausschließlich von einem oder sehr wenigen den Server-Rechnereinheiten bekannten Client-Rechnereinheiten an die Server-Rechnereinheiten gestellt. Die Server-Rechnereinheiten erkennen und bearbeiten ausschließlich Anfragen der ihnen bekannten Client-Rechnereinheit.

Vorzugsweise werden die von den Server-Rechnereinheiten zur Verfügung gestellten Daten durch die Client-Rechnereinheit mit Hilfe eines Datenmoduls, z.B. mit Hilfe eines Systemdaten enthaltenen Repositorys, abgerufen.

Vorzugsweise werden Daten auf Anfrage von mindestens einem Anwendermodul durch die Client-Rechnereinheit von den Server-Rechnereinheiten abgerufen und an das Anwendermodul weitergeleitet. Anwendermodule, auch Applikationen genannt, umfassen Anwenderprogrammeinheiten, z.B. Auswerteprogramme und Archivierungsprogramme.

Die Anwendermodule weisen ein oder mehrere Module auf. Die Module sind z.B. als Nutzermodule, auf die ein Dritter, d.h. ein Endnutzer, zugreifen kann, als Servicemodule, mit denen z.B. die Vertragsbeziehungen zwischen Stromversorgern, Lieferanten und Endnutzern verwaltet werden, als Betriebsmodule, mit denen z.B. als Zähler ausgebildete Messgeräte überwacht und gesteuert werden, und/oder als Module für weitere Anwendungen z.B. zur Ermittlung von Daten aus als Haushaltgeräte ausgebildeten Messgeräten und zur Steuerung der Messgeräte oder der Zusatzgeräte ausgebildet. Ein Endnutzer ist z.B. ein Energie-Verbraucher.

In einer Ausführungsform der Erfindung werden Daten von mindestens einem Endnutzer über mindestens ein, z.B. ein Nutzermodul umfassendes, Anwendermodul abgefragt, d.h. abgerufen.

In einer Ausführungsform der Erfindung werden Daten, z.B. zum Steuern, auf Anfrage von mindestens einem ein Steuermodul umfassenden Anwendermodul durch die Client-Rechnereinheit an mindestens eine Server-Rechnereinheit weitergeleitet. Von der Server-Rechnereinheit werden die Daten z.B. an einen Aktor eines Haushaltsgerätes übermittelt, der darüber gesteuert wird.

In einer Ausführungsform der Erfindung werden die Daten mindestens einer Server-Rechnereinheit über einen DSL-Anschluss abgerufen.

Zum Abrufen der Daten von Server-Rechnereinheiten über DSL-Anschlüsse wird in einer Ausführung eine feste Adressierung der Server-Rechnereinheiten eingesetzt. Dabei werden den Server-Rechnereinheiten jeweils feste öffentliche IP-Adressen zugeordnet, die zusammen mit den Identifikatoren, d.h. mit ihren symbolischen Namen, in einer Tabelle abgelegt werden.

Zum Abrufen der Daten von den Server-Rechnereinheiten wird in einer bevorzugten Ausführung eine dynamisch wechselnde Adressierung der Server-Rechnereinheiten eingesetzt.

Dabei werden den Server-Rechnereinheiten jeweils in einem bestimmten Rhythmus wechselnde öffentliche IP-Adressen zugeordnet. In einer Ausführungsform werden die wechselnden öffentlichen IP-Adressen zusammen mit den Identifikatoren auf Initiative der Server-Rechnereinheiten in einer Tabelle eines Domain Name Services DNS abgelegt.

In einer weiteren Ausführungsform werden die wechselnden öffentlichen IP-Adressen zusammen mit den Identifikatoren auf Initiative der Server-Rechnereinheiten mit Hilfe von Adressverwaltungskommandos des Session-Initiation-Protocols SIP in einer Tabelle z.B. eines SIP-Registrars abgelegt. Dazu werden DSL-Anschlüsse mit der Fähigkeit, Adressverwaltungskommandos des Session-Initiation-Protocol SIP zu verwenden, eingesetzt. Insbesondere wird vorzugsweise zum Abrufen der Daten von mindestens einer Server-Rechnereinheit eine dynamisch wechselnde Adressierung über einen DSL-Anschluss mit der Fähigkeit, Adressverwaltungskommandos des Session-Initiation-Protocol SIP zu verwenden, durchgeführt.

Besonderer Vorteil dieses Verfahrens ist, dass bereits in vielen Haushalten und damit in entsprechenden Messstationen vorhandene oder in Zukunft erworbene DSL-Anschlüsse mit der oben genannten Fähigkeit zur Adressierung der Server-Rechnereinheiten, d.h. mit der Fähigkeit, Adressverwaltungskommandos des Session-Initiation-Protocol SIP zu verwenden, mit genutzt werden können. Ein geeigneter DSL-Anschluss weist einen Router z.B. auch für IP-Telefone auf, mit der Fähigkeit, Voice-over-IP VolP und dazu das Session-Initiation-Protocol SIP zu verwenden. Der Einsatz spezieller Anschlüsse, wie separater DSL-Anschlüsse oder von GPRS/UMTS-Verbindungen, ist bei diesem Verfahren nicht notwendig. Auch eine aufwendige Programmierung eines vorhandenen DSL-Routers für einen Domain Name Service DNS wird nicht benötigt.

Ein erfindungsgemäßes verteiltes System zum Ermitteln und Verwalten von Daten aus einer Vielzahl von Messgeräten gemäß dem ersten Vorrichtungsanspruch ist besonders gut geeignet, ein erfindungsgemäßes Verfahren durchzuführen. Ein in den Unteransprüchen beschriebenes verteiltes System ist besonders geeignet, ein entsprechendes erfindungsgemäßes Verfahren durchzuführen.

Ein erfindungsgemäßes verteiltes System zum Ermitteln und Verwalten von Daten aus einer Vielzahl von Messgeräten weist mehrere Messstationen auf, die jeweils mindestens ein Messgerät und eine Server-Rechnereinheit umfassen. Das verteilte System weist weiterhin mindestens eine Clientstation auf, die eine Client-Rechnereinheit umfasst. Das verteilte System nutzt ein Kommunikationsnetzwerk, vorzugsweise das Internet, wobei mit der Client-Rechnereinheit die durch die Server-Rechnereinheit zur Verfügung gestellten Daten über das Kommunikationsnetzwerk abrufbar sind.

Vorzugsweise weist die Server-Rechnereinheit mindestens einen Mikro-Server auf.

Vorzugsweise ist mindestens eines der Messgeräte, das an einen Mikro-Server angeschlossen ist, als einfacher Haushaltszähler, insbesondere als einfacher, elektronischer Haushaltszähler, ausgebildet. Vorzugsweise ist mindestens eines der Messgeräte, das an einen Mikro-Server angeschlossen ist, als Haushaltsgerät mit einem Sensor ausgebildet. Vorzugsweise weist mindestens eines der als Haushaltgerät ausgebildeten Messgeräte oder mindestens ein Zusatzgerät, die an einen Mikro-Server angeschlossen sind, einen Aktor auf.

Die Clientstation weist vorzugsweise ein, z.B. Repository genanntes, Datenmodul, auf. Das Datenmodul ist der Client-Rechnereinheit zugeordnet und enthält Systemdaten. Vorzugsweise kann das Datenmodul auch ermittelte Daten enthalten. Alternativ kann das Datenmodul auch außerhalb der Clientstation angeordnet sein.

Ein erfindungsgemäßes verteiltes System weist vorzugsweise mindestens ein Anwendermodul auf, das mit der Client-Rechnereinheit verbunden ist. Insbesondere sind Anwenderprogramme der Anwendermodule mit der Client-Rechnereinheit verbunden und kommunizieren mit dem Clientprogramm.

In einer Ausführungsform der Erfindung weist die Clientstation weitere Anwendermodule auf. D.h. insbesondere sind ein oder mehrere Anwendermodule in der Clientstation angeordnet.

In einer weiteren Ausführungsform sind alternativ oder zusätzlich ein oder mehrere Anwendermodule separat angeordnet und über das Kommunikationsnetzwerk oder ein alternatives Kommunikationsnetzwerk mit der Client-Rechnereinheit verbunden.

In einer weiteren Ausführungsform der Erfindung weist das verteilte System mindestens einen Endnutzer auf, der ggf. über das Kommunikationsnetzwerk ein oder mehrere Anwendermodule abfragen, d.h. Daten abrufen, kann. Dazu umfasst mindestens ein Anwendermodul ein Nutzermodul für die Endnutzer. Die Endnutzer sind beispielsweise über das Kommunikationsnetzwerk mit dem das Nutzermodul aufweisende Anwendermodul verbunden, das über seine Anwenderprogramme ggf. Anfragen der Endnutzer an die Client-Rechnereinheit weiterleitet.

In einer weiteren Ausführungsform der Erfindung weist das verteilte System mindestens ein Anwendermodul auf, das ein Steuermodul für Messgeräte umfasst.

In einer Ausführungsform der Erfindung ist mindestens eine Server-Rechnereinheit des verteilten Systems über einen DSL-Anschluss mit der Fähigkeit, Adressverwaltungskommandos des Session-Initiation-Protocols SIP zu verwenden, an das Kommunikationssystem angeschlossen. Vorzugsweise weist der DSL-Anschluss einen DSL-Router mit dieser Fähigkeit auf. Ein derartiger DSL-Router, z.B. ein VolP-fähiger und dazu SIP-fähiger DSL-Router ist bereits in vielen Haushalten vorhanden und kann für die Adressierung, und zwar für die Zuordnung der Identifikatoren mit den privaten IP-Adressen im häuslichen Bereich einer Messstation zu den öffentlichen IP-Adressen, mit genutzt werden.

### Zeichnungen:

Die Erfindung wird anhand von Beispielen, die in den Figuren der Zeichnung schematisch dargestellt sind, weiter erläutert. Es zeigen:
- Figur 1 ein Blockdiagramm eines ersten erfindungsgemäßen verteilten Systems;
- Figur 2 ein Ablaufdiagramm für das Prinzip des Datenaustausches in dem erfindungsgemäßen verteilten System;
- Figur 3a schematisch das erste erfindungsgemäße verteilte System mit mehreren Messstationen und einer Clientstation;
- Figur 3b das in Figur 3a dargestellte erfindungsgemäße verteilte System, bei dem die Clientstation eine Client-Rechnereinheit, ein Datenmodul (Repository) und Anwendermodule aufweist;
- Figur 3c das in Figur 3b dargestellte erfindungsgemäße verteilte System mit einer alternativen Clientstation mit vier Anwendermodulen;
- Figur 4 eine Anzeige eines format-interpretierten XML-Dokumentes mit Statusdaten eines Messgerätes;
- Figur 5 eine Anzeige eines format-interpretierten XML-Dokumentes mit Messdaten eines Messgerätes,
- Figur 6 eine Abfrage und Ausgabe von Messdaten eines XML-Dokumentes bei einem Endnutzer;
- Figur 7 ein aus Messdaten ermitteltes 24-Stunden-Verbrauchsprofil eines Endnutzers;
- Figur 8 eine Messstation des erfindungsgemäßen Systems mit mehreren Messgeräten und einer Server-Rechnereinheit mit einem Haupt-Mikro-Server und weiteren Mikro-Servern;
- Figur 9 die Messstation der Figur 8 mit Angabe von Funktionen des Haupt-Mikro-Servers;
- Figur 10 einen Mikro-Server;
- Figur 11 eine alternative Messstation und eine Clientstation;
- Figur 12 eine Ausführungsform der in Figur 11 dargestellten Messstation, eine Clientstation und ein Anwendermodul;
- Figur 13 ein Beispiel des Ablaufs einer Registrierung eines Messgerätes;
- Figur 14 ein Beispiel einer Ermittlung der Daten aus dem Messgerät;
- Figur 15 schematisch ein zweites erfindungsgemäßes verteilten Systems; und
- Figur 16 das erfindungsgemäße verteilte System der Figur 15 in verfeinerter Darstellung.

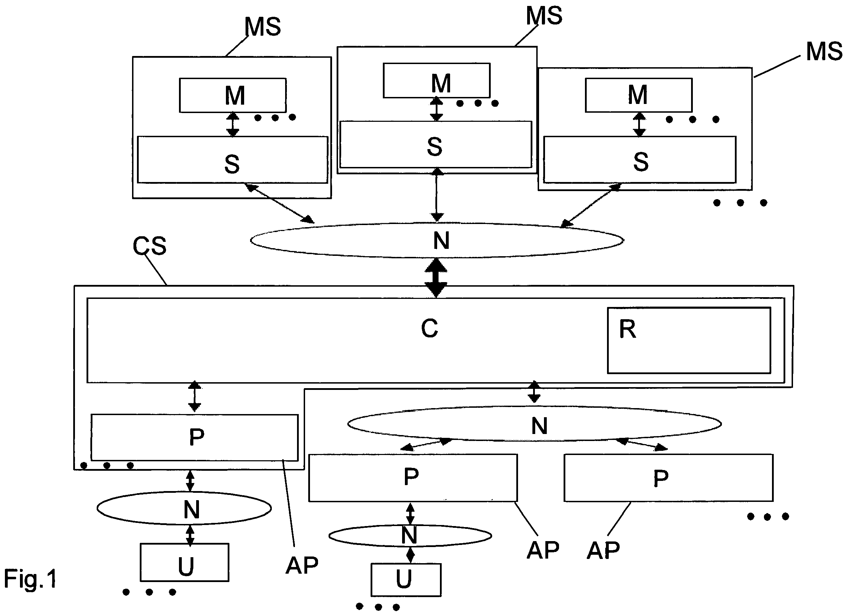

**Figur 1** zeigt ein Blockdiagramm eines ersten erfindungsgemäßen verteilten Systems zum Ermitteln und Verwalten von Daten aus einer Vielzahl von Messgeräten M entsprechend dem invertieren Client-Server-Modell. Es weist mehrere Messstationen MS auf, die jeweils mindestens ein Messgerät M und eine Server-Rechnereinheit S umfassen. Die Server-Rechnereinheiten S steuern die Messgeräte M und sind an ein Kommunikationsnetzwerk **N** angeschlossen. In Figur 1 sind drei von vielen Messstationen MS mit jeweils einem von mehreren Messgeräten M und einer Server-Rechnereinheit S zu sehen.

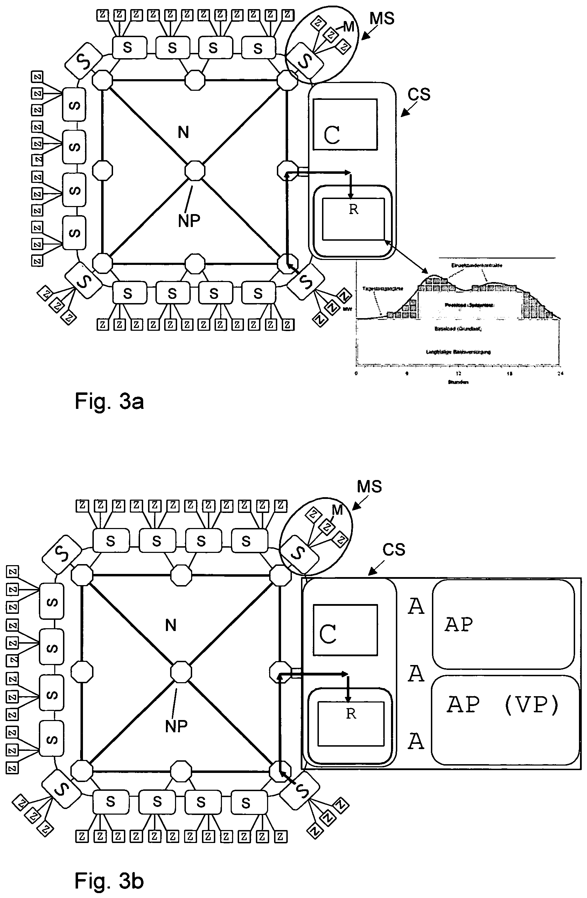

Das erfindungsgemäße verteilte System weist mindestens eine Clientstation CS auf, die eine Client-Rechnereineinheit C und ein Datenmodul R, z.B. ein Systemdaten enthaltenes Repository, umfasst. (Das Bezugszeichen der Clientstation CS ist in den Figuren der Prioritätsanmeldung mit ZS angegeben und ggf. in den Figuren 3a, 3b, 8, 9, 10, 11, 12, und 13, die den Figuren 1 bis 8 der Prioritätsanmeldung entsprechen, durch CS ersetzt.)

Die Client-Rechnereinheit C ist ebenfalls an das Kommunikationsnetzwerk N angeschlossen. Mit der Client-Rechnereinheit C sind die durch die Server-Rechnereinheiten S der Messstationen MS zur Verfügung gestellten Daten über das Kommunikationsnetzwerk N abrufbar. Das Datenmodul R ist der Client-Rechnereinheit C zugeordnet und ist z.B. als Datenbank ausbildet, die insbesondere alle zum Betrieb notwendigen Systemdaten als Repository enthält.

Das verteilte System weist mindestens ein Anwendermodul AP auf, das über jeweils mindestens ein Anwenderprogramm P mit der Client-Rechnereinheit C verbunden ist.

In Figur 1 ist auf der linken Seite ein Anwendermodul AP von mehreren Anwendermodulen AP zu sehen, dessen Anwenderprogramm P direkt mit der Client-Rechnereinheit C verbunden ist. Dieses Anwenderprogramm P ist zum Beispiel in der Clientstation CS auf der Rechnereinheit angeordnet, die die Client-Rechnereinheit C enthält, und statt über das Kommunikationsnetzwerk N über ein internes Interprozess-Kommunikationsmodul mit dem Clientprogramm verbunden.

Figur 1 zeigt zwei weitere von mehreren Anwendermodulen AP, die in separaten Anwenderstationen angeordnet sind und deren Anwenderprogramme P über das Kommunikationsnetz N mit der Client-Rechnereinheit C der Clientstation CS verbunden sind.

Die Anwendermodule AP umfassen z.B. Nutzermodule, Servicemodule, Betriebsmodule, und/oder Module für weitere Anwendungen, z.B. Steuermodule für Haushaltsgeräte.

Mindestens ein Anwendermodul AP ist durch einen Endnutzer U abfragbar. Insbesondere ist mindestens ein ein Nutzermodul umfassendes Anwendermodul AP mit einer als Nutzerprogrammeinheit ausgebildeten Anwenderprogrammeinheit P versehen, auf die ein Dritter, z.B. ein Endnutzer U, zugreifen kann. D.h. an diese Anwendermodule AP sind Endnutzer U des verteilten Systems z.B. über das Kommunikationssystem N angeschlossen.

In Figur 1 sind Endnutzer U sowohl mit dem direkt mit der Client-Rechnereinheit C verbundenen Anwendermodul AP als auch mit einem der über das Kommunikationssystem N mit der Client-Rechnereinheit C verbundenen Anwendermodule AP verbunden. Diese Anwendermodule AP umfassen Nutzermodule.

Die weiteren nicht dargestellten Messstationen MS, Messgeräte M, Anwendermodule AP und Endnutzer U sind in Figur 1 durch "..." symbolisiert. Zwischen den, ggf. über das Kommunikationsnetzwerk N, miteinander verbundenen Elementen des verteilten Systems ist ein durch Doppelpfeile dargestellter beidseitiger Datenaustausch möglich.

Das Kommunikationsnetzwerk N ist das Internet.

Bei einer nicht dargestellten Alternative ist mindestens ein Endnutzer U direkt an einem oder an mehreren Anwendermodulen AP angeschlossen.

Bei einem alternativen verteilten System sind ein oder mehrere Anwendermodule AP über ein alternatives großräumiges Kommunikationsnetzwerk oder über ein lokales Kommunikationsnetzwerk oder über interne Interprozess-Kommunikationsmodule mit der Client-Rechnereinheit C verbunden.

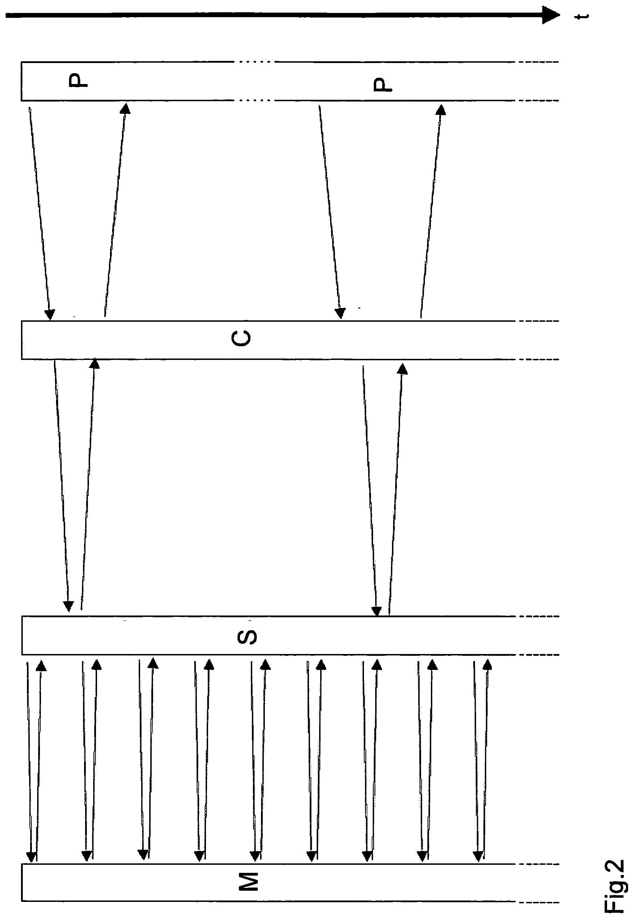

Zum Ermitteln und Verwalten der Daten aus einer Vielzahl von Messgeräten M werden Daten in den Messstationen MS jeweils aus mindestens einem Messgerät M ermittelt. **Figur 2** zeigt ein Ablaufdiagramm für das Prinzip der Datenermittlung von einem Messgerät M in dem erfindungsgemäßen verteilten System. Im Verlauf der Zeit t, die am rechten Rand der Figur 2 als Zeitstrahl dargestellt ist, tauschen die Server-Rechnereinheit S und das eine dargestellte Messgerät M immer wieder, z.B. in regelmäßigen Abständen, Daten aus. Dieser Datenaustausch ist auf der linken Seite der Figur 2 zu sehen. Dabei empfängt die Server-Rechnereinheit S beispielsweise jeweils den aktuellen Messwert des Messgerätes M.

Diese ermittelten Daten, z.B. die Messwerte, werden in der Server-Rechnereinheit S der Messstation MS zu clientfähigen Daten bearbeitet und zur Verfügung gestellt. Die zur Verfügung gestellten Daten aus den Messstationen MS werden über das Kommunikationsnetzwerk N, das Internet, in der Clientstation CS mit der Client-Rechnereinheit C abgerufen und weiterbearbeitet.

Zum Beispiel, auf eine zu einem beliebigen Zeitpunkt stattfindenden Anfrage von einer Anwenderprogrammeinheit P eines Anwendermoduls AP, ggf. über das Kommunikationsnetzwerk N, ruft die Client-Rechnereinheit C die entsprechenden von der Server-Rechnereinheit S zur Verfügung gestellten Daten über das Kommunikationsnetzwerk N ab und leitet sie an die Anwenderprogrammeinheit P des Anwendermoduls AP weiter. Die Abfragen der Client-Rechnereinheit C sind in der Mitte und die Anfragen der Anwenderprogrammeinheit P auf der rechten Seite der Figur 2 zu sehen.

Die von der Server-Rechnereinheit S zur Verfügung gestellten Daten werden ggf. auf Anfrage eines Endnutzers U über ein ein Nutzermodul umfassendes Anwendermodul AP von der Client-Rechnereinheit C abgerufen.

Zum Ermitteln und Verwalten von Daten aus einer Vielzahl von Messgeräten M, die den, z.B. häuslichen, Messstationen MS zugeordnet sind, ermitteln die Server-Rechnereinheiten S parallel Daten aus den Messgeräten M, bearbeiten sie zu clientfähigen Daten und stellen sie zur Verfügung. D.h. bereits in den Server-Rechnereinheiten S findet eine Verwaltung der ermittelten Daten statt.

In der Server-Rechnereinheit S werden die regelmäßig, z.B. zyklisch, ermittelten Daten gespeichert und zum Abruf durch die Client-Rechnereinheit C zur Verfügung gestellt. Außerdem stellt die Server-Rechnereinheit S dynamisch ermittelte Daten, z.B. aktuell gewonnene Messdaten, wie Verbrauchsdaten, auf Anfrage eines Anwendermoduls AP über einen Abruf durch die Client-Rechnereinheit C zur Verfügung.

Die durch die Server-Rechnereinheiten S zur Verfügung gestellten Daten werden durch die Client-Rechnereinheit C abgerufen und weiter bearbeitet. Die weitere Bearbeitung ist z.B. eine Weiterleitung an eine Anwenderprogrammeinheit P, auf deren Anfrage die Client-Rechnereinheit C die Daten abgerufen hat.

Bei der Bearbeitung der Daten in den Server-Rechnereinheiten S zu clientfähigen Daten werden die ermittelten Daten als XML-Dokumente erstellt. Die ermittelten Daten, d.h. die XML-Dokumente, werden verschlüsselt. Nach dem Abruf über das Kommunikationsnetzwerk N, d.h. über Internetprotokolle, z.B. HTTP-Protokolle, werden die verschlüsselten Daten in der Client-Rechnereinheit C entschlüsselt.

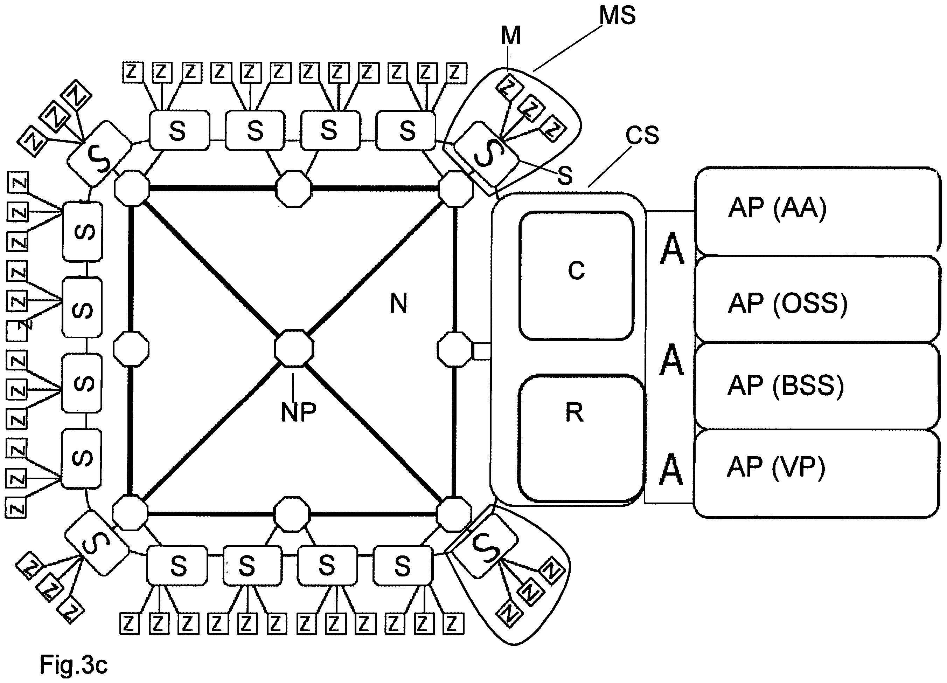

Die von den Server-Rechnereinheiten S zur Verfügung gestellten Daten werden durch die Client-Rechnereinheit C mit Hilfe eines der Client-Rechnereinheit C zugeordneten Datenmoduls R abgerufen. Das Datenmodul R enthält alle Systemdaten der Elemente des verteilten Systems, die unter anderem zur Überprüfung der Autorisation z.B. von anfragenden Anwendermodulen AP oder zur Ermittlung von aktuellen Internet-Adressen z.B. aus vorgegebenen symbolischen Namen der Server-Rechnereinheiten S eingesetzt werden. **Die** **Figuren 3a, 3b****,** **3c** zeigen schematisch das erste verteilte System zum Ermitteln und Verwalten von Daten aus einer Vielzahl von Messgeräten M in einer anderen Darstellung. Die Figuren zeigen 16 von vielen Messstationen MS, die die Messgeräte M, in diesem Fall jeweils drei Messgeräte M, und eine Server-Rechnereinheit S umfassen. Die Messgeräte M sind z.B. als Zähler für Strom (Elektro-Zähler), für Wärme oder für Gas ausgebildet. Die Server-Rechnereinheiten S sind an das Kommunikationsnetzwerk N mit Netzwerkknoten NP angeschlossen. Das Kommunikationsnetzwerk N ist das Internet.

Dargestellt ist außerdem die Clientstation CS, die eine Client-Rechnereineinheit C und ein Datenmodul R, auch als zentrales Repository bezeichnet, umfasst. Die Client-Rechnereinheit C ist ebenfalls an das Kommunikationsnetzwerk N angeschlossen, wobei mit der Client-Rechnereinheit C durch die Server-Rechnereinheiten S zur Verfügung gestellte Daten der Messgeräte M abrufbar sind.

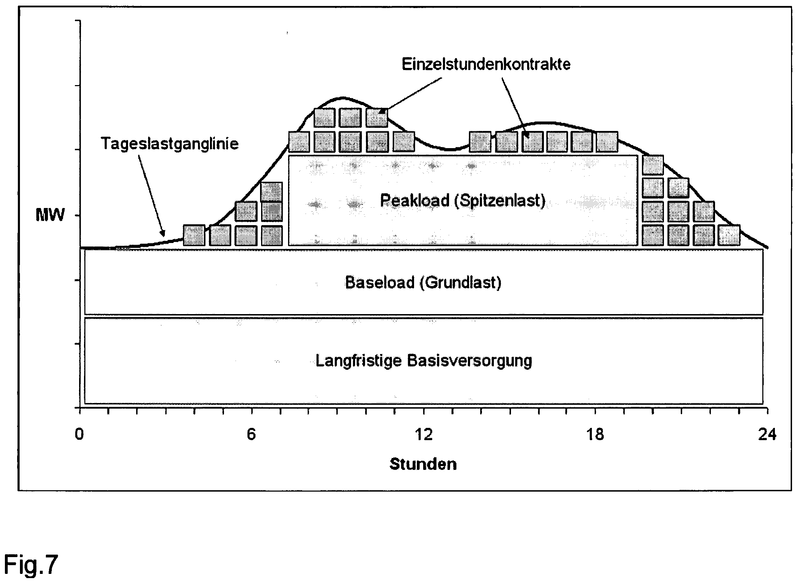

In Figur 3a ist das in Figur 7 größer dargestellte Verbrauchsprofil eines Endnutzers U in Verbindung mit der Clientstation CS zu sehen. Das Verbrauchsprofil ist ein Beispiel für von einer entsprechenden Server-Rechnereinheit S ermittelte und ggf. über die Client-Rechnereinheit C mit Hilfe des Repositorys R weitergegebene Daten.

Figur 3b zeigt die Clientstation CS, die außerdem Anwendermodule AP umfasst. Anwendermodule AP sind Applikationen, z.B. Auswerteprogramme. Ein Anwendermodul AP ist als Verbraucherportal (Nutzermodul VP) ausgebildet, d.h. es ist als Anwendungsprogramm, auf das ein Dritter, z.B. ein Endbenutzer U zugreifen kann, ausgebildet. Zugriff ist nur autorisierten Programmen und autorisierten Verbrauchern (Endnutzern) möglich (triple A-Schnittstelle). D.h. mindestens ein Anwendermodul AP ist von mindestens einem Endnutzer U abfragbar.

Figur 3c zeigt eine alternative Clientstation CS mit einer Client-Rechnereinheit C, die über eine triple A-Schnittstelle mit vier Anwendermodule AP verbunden ist. Auch bei dieser Alternative sind die Anwendermodule AP in der Clientstation CS angeordnet, wobei die triple A-Schnittstelle eine interne Verbindung (z.B. ein internes Interprozess-Kommunikationsmodul) symbolisiert, über die die Anwendermodule AP auf die Client-Rechnereinheit C zugreifen können. Die Anwenderprogrammeinheiten der Anwendermodule AP sind in den Figuren 3b und 3c nicht eingezeichnet.

Anwenderprogrammeinheiten weiterer nicht in den Figuren 3b und 3c dargestellter Anwendermodule AP sind, wie erwähnt, über das Kommunikationsnetzwerk N an die Clientstation CS angeschlossen. Auch die Verbindung der separaten Anwendermodule AP über das Kommunikationsnetzwerk N mit der Clientstation CS erfolgt nach Maßgaben einer triple A-Schnittstelle.

Bei einer Alternative sind alle Anwendermodule AP über das Kommunikationsnetzwerk N mit der Clientstation CS verbunden.

Der Datenaustausch zwischen den Messgeräten M und den Server-Rechnereinheiten S erfolgt über eine Nahfeld-Kommunikation, d.h. über eine Inhaus-Telemetrie.

Wie erwähnt, sind die Server-Rechnereinheiten S über Netzwerkknoten NP an das Kommunikationsnetzwerk N, nämlich an das Internet, angeschlossen. Prinzipiell sind die Server-Rechnereinheiten S über das Kommunikationsnetzwerk N auch miteinander verbunden, wie dies durch Verbindungslinien angezeigt ist. Da den Server-Rechnereinheiten S keine Internet-Adressen anderer Server-Rechnereinheiten S bekannt sind und auf den Server-Rechnereinheiten S auch kein entsprechendes Client-Programm installiert ist, können und sollen die Server-Rechnereinheiten S nicht untereinander kommunizieren.

Wie ebenfalls bereits erwähnt, ist Zugriff auf die Client-Rechnereinheit C nur autorisierten Programmen der Anwendermodule AP, d.h. autorisierten Anwenderprogrammeinheiten P, und über diese autorisierten Endnutzern U (Verbrauchern) möglich. Insbesondere ist die Verbindung zwischen den Anwendermodulen AP, und zwar deren Anwenderprogrammeinheiten P, und der Client-Rechnereinheit C automatisch gesichert. Bei Anfragen der Anwenderprogrammeinheiten P erfolgt die Sicherung durch eine Überprüfung der Authentizität, der Autorisation und der Abrechnung anhand der im Datenmodul R abgelegten Systemdaten. Die Überprüfung ist, wie bereits angedeutet, in den Figuren 3b und 3c durch drei A symbolisiert. Die entsprechende Schnittstelle ist als triple A-Schnittstelle bezeichnet (triple A: Authentication, Authorization, Accounting).

Die in Figur 3c gezeigten vier Anwendermodule AP sind als Nutzermodul VP (Verbraucherportal), als Servicemodul BSS (buisness support systems) als Betriebsmodul OSS (operations support systems) und als Modul AA für weitere Anwendungen ausgebildet. Zumindest das als Betriebsmodul ausgebildete Anwendermodul AP umfasst mindestens ein Steuermodul.

Mit einem Nutzermodul VP werden Endnutzern U z.B. individuelle, aktuelle und historische Informationen über die Messgeräte M seines Haushaltes, d.h. seiner Messstation MS, zur Verfügung gestellt. Mit einem Servicemodul BSS werden z.B. die Vertragsbeziehungen zwischen Stromversorgern, Lieferanten, Partnern und Endnutzern U sowie die Produkte und Ressourcen verwaltet. Mit einem Betriebsmodul OSS werden z.B. die Messgeräte M überwacht und ggf. gesteuert. Beispielsweise werden mit einem Steuermodul eines Betriebsmoduls OSS in Form einer Fernwartung Installationsdaten der Messgeräte M in der jeweiligen Messstation MS ein- oder ausgerichtet, d.h. an die Server-Rechnereinheit weitergeleitet. Ein Betriebsmodul OSS ist z.B. einem Messstellenbetreiber zugeordnet. Mit einem Modul AA für weitere Anwendungen werden z.B. weitere Haushaltsgeräte abgefragt und gesteuert.

In einer Alternative stehen zwei oder mehrere Anwendermodule AP in Beziehung zueinander und tauschen direkt oder über das Kommunikationsnetzwerk N oder ein anderes Kommunikationsnetzwerk Daten aus.

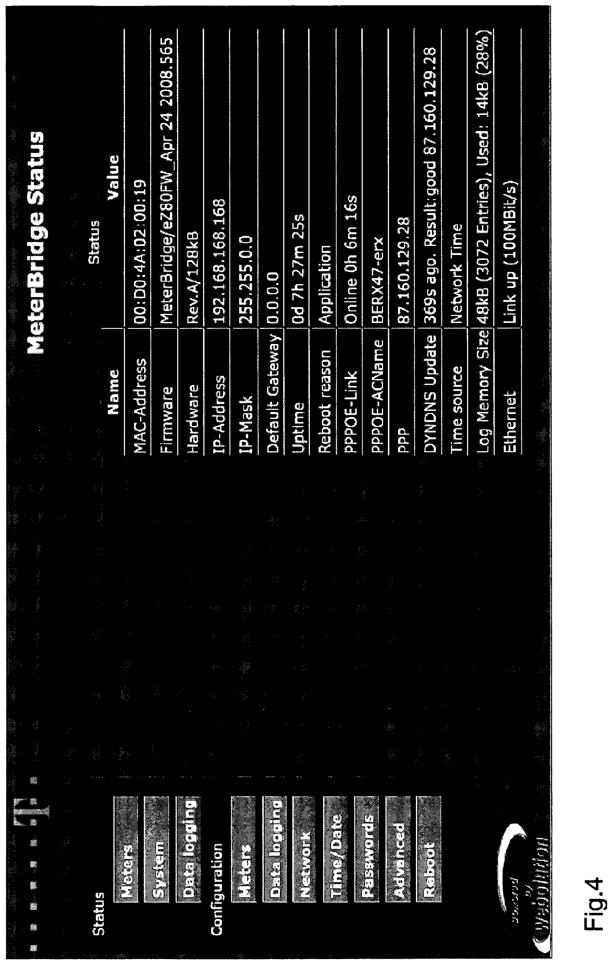

**Figur 4** zeigt ein Beispiel einer Anzeige eines XML-Dokumentes mit Statusdaten eines Messgerätes M. Das XML-Dokument wurde von der entsprechenden Server-Rechnereinheit S aus den aus dem Messgerät M ermittelten Daten erstellt und zur Verfügung gestellt und z.B. auf Anfrage einer Anwenderprogrammeinheit P eines als Betriebsmodul OSS ausgebildeten Anwendermoduls AP durch die Client-Rechnereinheit C mit Hilfe des Datenmoduls R zur Anwenderprogrammeinheit P weitergeleitet. Zur in Figur 4 gezeigten Anzeige wurde das XML-Dokument von der Anwenderprogrammeinheit P bearbeitet, d.h. Figur 4 zeigt ein bereits format-interpretiertes XML-Dokument.

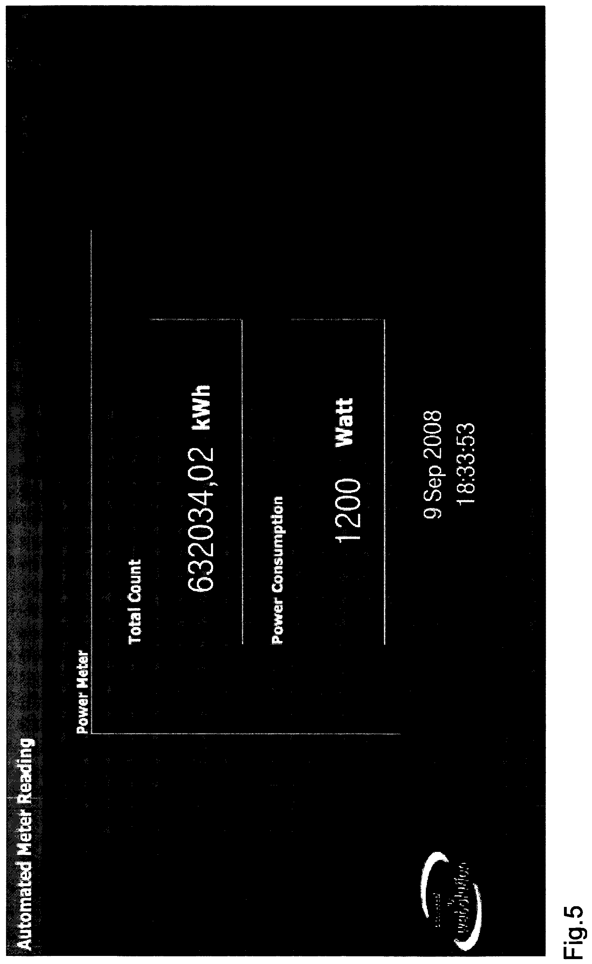

**Figur 5** zeigt ein weiteres Beispiel einer Anzeige eines format-interpretierten XML-Dokumentes, und zwar eines XML-Dokumentes mit Messdaten eines Messgerätes M, das z.B. an ein als Servicemodul BSS ausgebildetes Anwendermodul AP oder an ein als Nutzermodul ausgebildetes Anwendermodul AP weitergeleitet wurde.

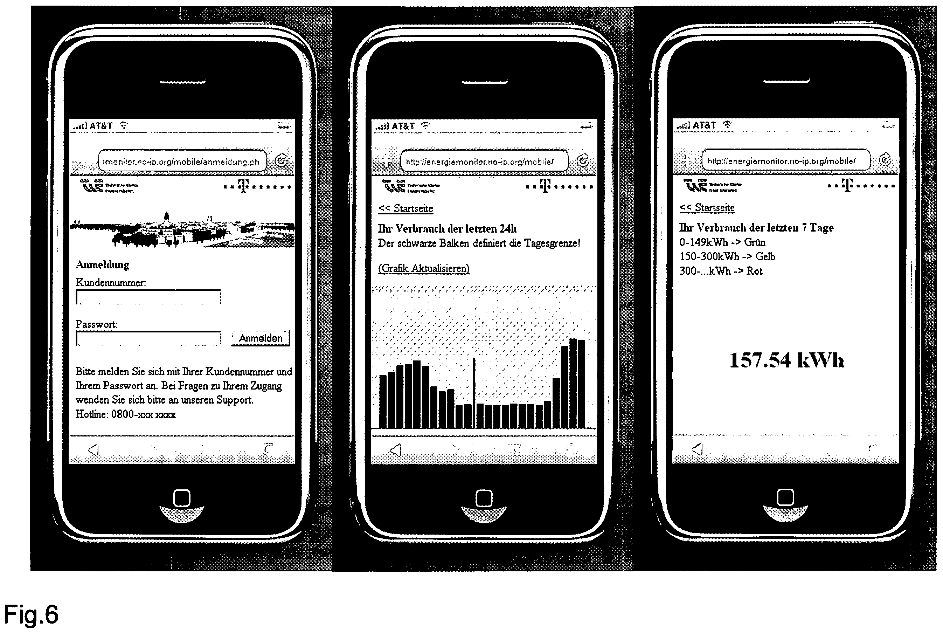

Eine Abfrage und Ausgabe von Messdaten eines XML-Dokumentes durch einen Endnutzer U ist in **Figur 6** zu sehen. Die zugrunde liegenden XML-Dokumente mit Messdaten eines Messgerätes M, z.B. eines Stromzählers, wurden durch die Client-Rechnereinheit C von der die Daten verwaltenden Server-Rechnereinheit S abgerufen und einem als Nutzermodul VP ausgebildeten Anwendermodul AP übermittelt, von dem sie durch den Endnutzer U abgerufen wurden. Die Daten wurden z.B. in der entsprechenden Anwenderprogrammeinheit P bearbeitet, wobei in diesem Beispiel der Stromverbrauch der letzten 7 Tage von 157,54 kWh mit Verbrauchsbereichen verglichen und anhand einer farblichen Anzeige dargestellt wurde (hier z.B. Gelb, für einen Verbrauch von 150 bis 300 kWh). Die Ermittlung des Stromverbrauchs der letzten 7 Tage wird in diesem Beispiel in der entsprechenden Server-Rechnereinheit S durchgeführt und der ermittelte Wert als XML-Dokument zur Verfügung gestellt. D.h. eine Verwaltung der ermittelten Daten findet sowohl in der Server-Rechnereinheit S als auch in der Anwenderprogrammeinheit AP des entsprechenden Anwendermoduls AP statt.

**Figur 7** zeigt beispielhaft ein aus Messdaten ermitteltes 24-Stunden-Verbrauchsprofil eines Endnutzers U, das auf verschiedene Lastfälle und damit auf mögliche verschiedene Tarifvereinbarungen aufgeteilt ist. Das Verbrauchsprofil ist auf eine langfristige, z.B. jährliche, Basisversorgung, eine, z.B. jahreszeitlich unterschiedliche, Grundlast, eine, z.B. tägliche, Spitzenlast und auf Einzelstunden aufgeteilt. Die Messdaten für dieses Beispiel sind von der entsprechenden Server-Rechnereinheit S ermittelt und als XML-Dokumente zur Verfügung gestellt. Über die Client-Rechnereinheit C wurden die Messdaten zur Anwenderprogrammeinheit P des entsprechenden Anwendermoduls AP, hier z.B. zu einem Servicemodul BSS zur Abrechnung des Verbrauchs, weitergegeben und gemäß der verschiedenen Tarifvereinbarungen bearbeitet.

Bei einer alternativen Ausführungsform der Erfindung umfasst ein Datenmodul R eines verteilten Systems neben den Systemdaten von den Server-Rechnereinheiten S abgefragte Messdaten. Bei dieser Alternative werden Daten, nämlich die Messdaten und ggf. bearbeitete Messdaten, wie Tages- und Wochenwerte oder Mittelwerte auch im Datenmodul R verwaltet. Hierbei werden, z.B. zur Abrechnung benötigte, Messdaten und/oder bearbeitete Messdaten von dieser Einheit des Datenmoduls R durch die Client-Rechnereinheit C an die Anwenderprogrammeinheit P des entsprechenden Anwendermoduls AP weitergegeben.

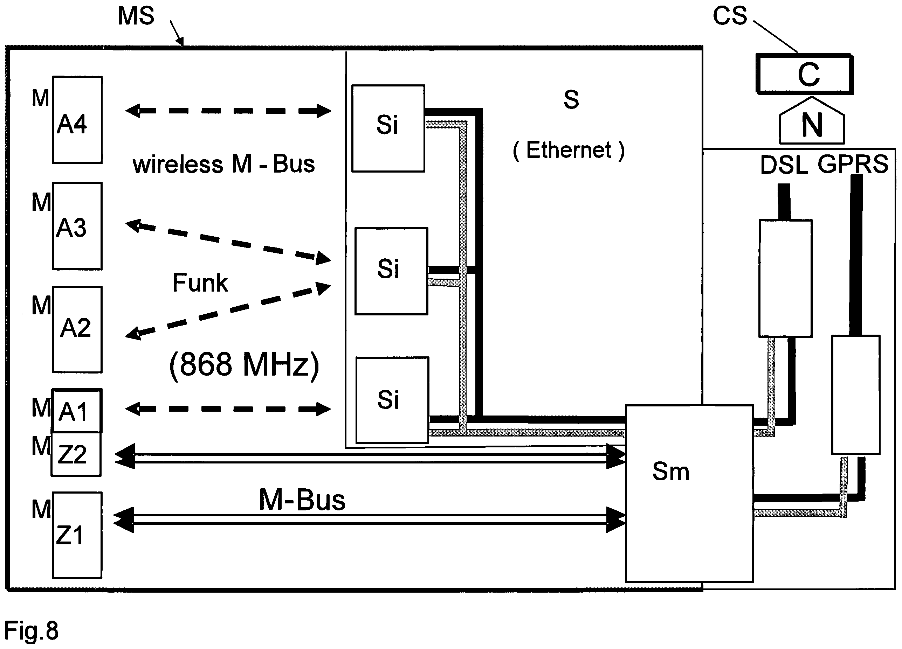

**Figur 8** zeigt eine der Messstationen MS des ersten Beispiels eines erfindungsgemäßen verteilten Systems mit einer Server-Rechnereinheit S und mit Messgeräten M. Die Server-Rechnereinheit S weist, wie jede dieses Beispiels, mindestens einen Mikro-Server Sm, Si auf. Die Messgeräte M sind an die Mikro-Server Sm, Si angeschlossen. Mindestens eines der Messgeräte M ist als einfacher Haushaltszähler Z1, Z2 ausgebildet und mindestens eines der Messgeräte M des verteilten Systems ist als ein Haushaltsgerät A2 bis A4 mit mindesten einem Sensor und ggf. mindestens einem Aktor ausgebildet. Beispielsweise ist mindestens ein Messgerät M als Haushaltsgerät A2 zur Erfassung von Daten, z.B. als Heizkostenverteiler, ausgebildet.

Bei der in der Figur 8 dargestellten Messstation MS weist die Server-Rechnereinheit S einen Haupt-Mikro-Server Sm und drei weitere Mikro-Server Si auf. Einige der Messgeräte M der Messstation MS sind direkt an den Haupt-Mikro-Server Sm angeschlossen; z.B. das Messgerät M für Strom, nämlich ein einfacher, elektronischer Haushaltszähler Z1 für Strom, und das für Gas, nämlich ein einfacher, elektronischer Haushaltszähler Z2 für Gas.

Weitere Messgeräte M der Messstation MS sind an die Mikro-Server Si angeschlossen und erst über diese an den Haupt-Mikro-Server Sm angeschlossen. Die weiteren Messgeräte M der Messstation MS sind als weitere elektrische oder elektronische Zähler A1 und/oder Haushaltsgeräte A2, A3, A4 mit Sensoren und ggf. Aktoren ausgebildet, und zwar als ein Wasserzähler A1, ein Heizkostenverteiler A2, ein Haushaltsgerät A3 zur Messung und Steuerung der die Gesundheit beeinflussenden Bedingungen, z.B. der Luftfeuchtigkeit, (health care) und ein Haushaltsgerät A4 zur Messung und Steuerung von Geräten im häuslichen Bereich, z.B. von Jalousien, (home care). Insbesondere die Haushaltsgeräte A3 und A4 weisen Aktoren auf.

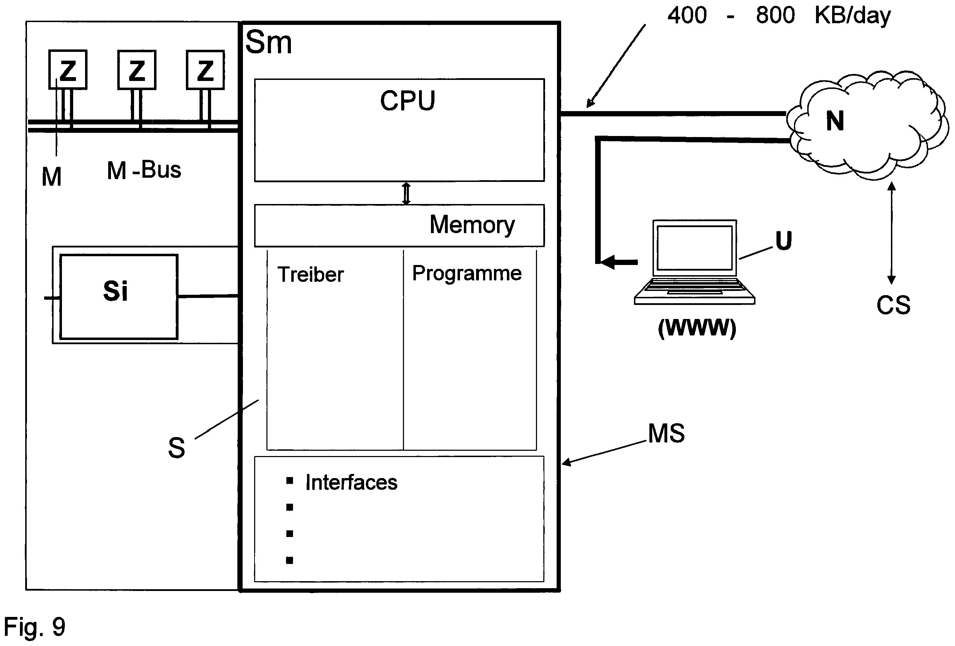

D.h. bevorzugt sind einfache Messgeräte, z.B. einfache, elektrische Haushaltszähler Z1, Z2, direkt an den Haupt-Mikro-Server Sm angeschlossen und weitere Messgeräte M, ggf. örtlich etwas entfernte Messgeräte M als Zähler A1 und als Hausgeräte A2, A3, A4 ausgebildete Messgeräte M, über Mikro-Server Si an den Haupt-Mikro-Server Sm angeschlossen. Dies ist auch in Figur 9 dargestellt.

In einer Ausführungsform ist mindestens ein Zusatzgerät, und zwar mindestens ein Aktor des Zusatzgerätes an einen der Mikro-Server Si, Sm angeschlossen.

Alternativ ist eine oder mehrere der Messstationen MS nur mit einem Mikro-Server Sm und mit einfachen Messgeräten M ausgerüstet.

Insbesondere zeigt Figur 8 (und beschreibt die entsprechende Figur 4 der Prioritätsanmeldung) die Ausbildung der Messstation MS mit einer im häuslichen Bereich installierten Telemetrie, die durch mindestens einen als interaktiven Multi-Utility-Server (auch intermedial Multi-Utility-Server iMUS genannt) Mikro-Server Sm, Si ermöglicht wird (Home iMUS Farm: Telemetrie als Inhaus-Installation). D.h. zumindest der Haupt-Mikro-Server Sm (Main Server), in diesem Beispiel auch die drei weiteren Mikro-Server Si (room server) sind als interaktive Multi-Ultility-Server iMUS ausgebildet. Die einfachen, elektronischen Haushaltszähler Z1, Z2 für Strom und Gas sind jeweils über einen durch ein doppeladriges Kupferkabel gebildeten M-Bus an den Haupt-Mikro-Server Sm angeschlossen. Die Haushaltsgeräte A1 bis A4 sind z.B. über drahtlose (wireless) M-Busse eines lokalen Funknetzwerks, einer Frequenz von z.B. 868 MHz, mit den Mikro-Servern Si verbunden (peripheral access communication). Die weiteren Mikro-Server Si sind z.B. über ein drahtgebundenes Kommunikationssystem, z.B. Ethernet, Inhouse Powerline Communication (home plug), oder ein drahtloses Kommunikationssystem, z.B. WLAN, mit dem Haupt-Mikro-Server Sm verbunden. Der Haupt-Mikro-Server Sm ist an das Kommunikationsnetzwerk N angeschlossen und darüber mit der Client-Rechnereinheit C verbunden. Der Anschluss des Haupt-Mikro-Servers Sm und damit der Server-Rechnereinheit S an das Kommunikationsnetzwerk N, das Internet, erfolgt über einen DSL-Übertragungsdienst und/oder einen GPRS-Übertragungsdienst und/oder einen UMTS-Übertragungsdienst.

**Figur 9** zeigt den Aufbau des Haupt-Mikro-Servers Sm der Messstation MS der Figur 8. Der Haupt-Mikro-Server Sm umfasst eine Rechnereinheit CPU, z.B. Zilog F91 (high-performance eZ80 Acclaim™, 8-bit microcontroller, up to 256 KB of reprogrammable Flash memory), eine Speichereinheit (Flash memory), Treiber für unterschiedliche Stromzähler (auch elektronische Haushaltszähler EHZ), Gaszähler, Wärmezähler (Minol) sowie Programme, z.B. zur Abfrage Strom, Abfrage Gas, Abfrage Wärme, Speicherung Tagesgang, Akkumulation und Kontrolle sowie Netzwerkeinheiten (Schnittstellenprogramme, interfaces), z.B. Ethernet MAC (PPoE), TCP/IP, http (webserver), etc.. Über zumindest eine Verbindung des Haupt-Mikro-Servers Sm mit dem Kommunikationsnetzwerk N und darüber mit der Client-Rechnereinheit C der Clientstation CS kann z.B. eine Datenmenge von 400 bis 800 KB pro Tag übermittelt werden. Figur 9 zeigt auch die Möglichkeit eines Zugriffs auf z.B. ermittelte Daten durch einen Endnutzer U über das Kommunikationsnetzwerk N, das Internet (z.B. www). Die als interaktive Multi-Utility-Server ausgebildeten Mikro-Server Sm, Si der Server-Rechnereinheit S dienen als Mittler zwischen der Inhaus-Telemetrie, d.h. der Ermittlung von Daten aus den Messgeräten M und ggf. der Steuerung der Messgeräte M des häuslichen Bereiches, und der über das Kommunikationsnetzwerk N agierenden Client-Rechnereinheit C, d.h. einer Informations- und Kommunikationstechnologie (IKT). An diese speziellen Mikro-Server Sm, Si können maximal 31 Zähler angeschlossen werden.

Als häusliche Telemetrie oder Inhaus-Telemetrie wird hier ein System mit Komponenten und Verfahren zur Datenübermittlung zwischen der Server-Rechnereinheit S, und zwar den Mikro-Servern Sm Si und den Messgeräten M, nämlich den Zählern Z1, Z2 über fest installierte Leitungen und den weiteren Messgeräten M über drahtlose Verbindungen, bezeichnet. Die Inhaus-Telemetrie umfasst die derzeit bekannten Systeme, z.B. zum Auslesen und Steuern von Sensoren aufweisenden Zählern Z1, Z2 (klassische Telemetrie von Sensoren), Systeme zur Heizkostenverteilung mit als Heizkostenverteiler bezeichneten Erfassungsgeräten sowie Systeme zum Überwachen und Steuern von weiteren Geräten über Aktoren im häuslichen Bereich (Telecommand von Aktoren im Haushalt).

Im Betrieb wird die Ermittlung und die Bearbeitung der Daten in jeder Server-Rechnereinheit S durch mindestens einen Mikro-Server Sm, Si durchgeführt, durch die die Messgeräte M auch gesteuert werden.

Die Daten aus den als einfache Haushaltszähler ausgebildeten Messgeräten M werden durch den Haupt-Mikro-Server Sm bearbeitet. Die Daten aus weiteren Messgeräten M werden durch weitere Mikro-Server Si ermittelt, ggf. bearbeitet und im Haupt-Mikro-Server Sm ggf. weiterbearbeitet und zur Verfügung gestellt.

Bei der Bearbeitung der aus den Messgeräten M ermittelten Daten werden durch die Mikro-Server Sm, Si XML-Dokumente erstellt. Die Mikro-Server Sm, Si verschlüsseln die ermittelten Daten. Die Daten werden in der Client-Rechnereinheit C entschlüsselt.

Insbesondere werden Daten aus den einfachen, elektronischen Haushaltszählern Z1 und Z2 für Strom und Gas ermittelt, dem Haupt-Mikro-Server Sm über die Kupferleitung M-Bus zugeleitet und durch diesen zu clientfähigen Daten bearbeitet und zur Verfügung gestellt. Aus dem Wasserzähler A1, dem Heizkostenverteiler A2 und den Haushaltsgeräten A3 und A4 werden ebenfalls Daten ermittelt. Diese Daten werden über das Funknetzwerk an die weiteren Mikro-Server Si geleitet. Die Mikro-Server Si leiten die ermittelten Daten über das lokale Netzwerk, z.B. Ethernet, zu dem Haupt-Mikro-Server Sm, in dem sie zu clientfähigen Daten bearbeitet und zur Verfügung gestellt werden.

Auf die in dem Haupt-Mikro-Server Sm der Server-Rechnereinheit S zur Verfügung gestellten Daten der verschiedenen Messgeräte M werden auf Anfrage mindestens eines Anwendermoduls AP über das Internet von der Client-Rechnereinheit C mit Hilfe des Datenmoduls R abgerufen und an das Anwendermodul AP weitergeleitet. Ein autorisierter Endnutzer U kann über das Internet, über ein entsprechendes Anwendermodul AP und über die Clientstation CS ermittelte Daten aus den Messgeräten M abrufen und ggf. Messgeräte M steuern. Die Daten werden z.B. aus den Sensoren der einfachen Haushaltszähler Z1, Z2 und/oder des Zählers A1 und/oder der Haushaltsgeräte A2 bis A4 ermittelt. Das entsprechende Anwendermodul AP umfasst z.B. ein Nutzermodul und ein Steuermodul. Ermittelte Daten werden auf Anfrage des Nutzermoduls des Anwendermoduls AP durch die Client-Rechnereinheit C abgerufen. Daten zum Steuern werden auf Anfrage des Steuermoduls an die Server-Rechnereinheit S und von den entsprechenden Mikro-Servern Si der Server-Rechnereinheit S z.B. an die Aktoren der Haushaltsgeräte A3, A4 weitergeleitet.

Alternativ werden ermittelte Daten bereits in den weiteren Mikro-Servern Si zu clientfähigen Daten bearbeitet und zur Verfügung gestellt.

Alternativ ist eine oder mehrere der Messstationen MS nur mit einem Mikro-Server Sm und ggf. mit einfachen Messgeräten M ausgerüstet.

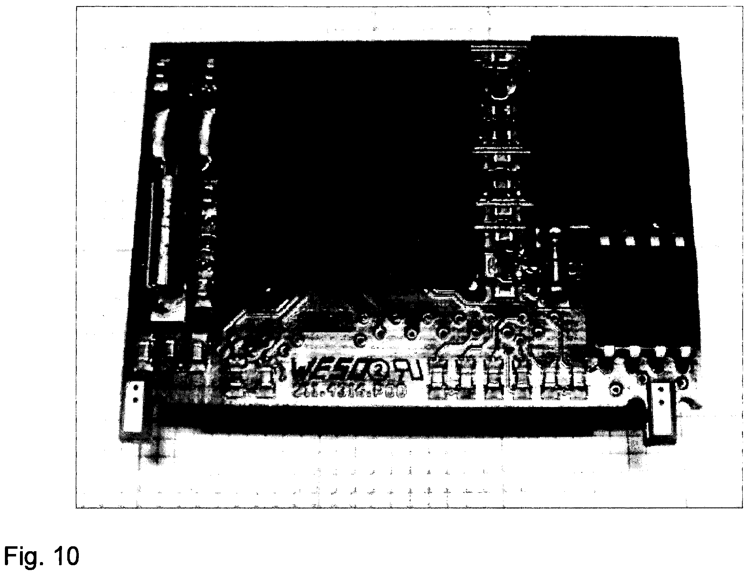

**Figur 10** zeigt ein elektronisches Bauteil mit einem Mikro-Server Sm, Si der Firma Webolution. Die Breite dieses elektronischen Bauteiles beträgt 2 cm und seine Länge 3 cm. Das den Mikro-Server Sm, Si enthaltene elektronische Bauteil ist z.B. auf der Hutschiene in einem Zählerkasten montierbar.

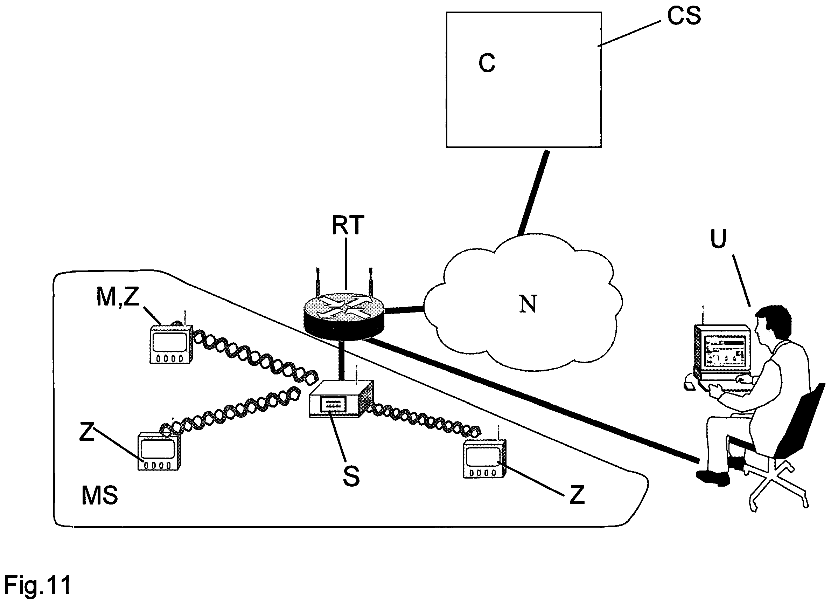

**Figur 11** zeigt eine alternative Messstation MS, bei der die Messgeräte M direkt an dem Mikro-Server Sm der Server-Rechnereinheit S angeschlossen sind. In Figur 11 ist dargestellt, dass die Server-Rechnereinheit S einen vorhandenen Internetanschluss (Router RT) mit nutzen kann. Dies ist in der Figur 5 der Prioritätsanmeldung beschrieben. Außerdem zeigt Figur 11 eine an das Kommunikationsnetzwerk N angeschlossene Clientstation CS mit einer Clientrechnereinheit C.

Insbesondere zeigt die Figur 11 eine alternative Messstation MS mit drei Messgeräten M, die als Zähler Z ausgebildet sind. Dabei sind die Messgeräte M direkt an einen nicht dargestellten Mikro-Server (iMUS) der Server-Rechnereinheit S angeschlossen. Die Server-Rechnereinheit S ist über den Router RT an das Kommunikationsnetzwerk N, das Internet, angeschlossen. In Figur 11 ist dargestellt, dass dieser Router RT auch von einem der Messstation MS zugeordneten Endnutzer U verwendet wird, um Daten über das Kommunikationsnetzwerk N auszutauschen. D.h. Figur 11 zeigt, dass die Server-Rechnereinheit S einen vorhandenen Internetanschluss, nämlich den Router RT, mit nutzen kann.

57,9 % der deutschen Privathaushalte verfügen über einen Internetanschluss (und 95,2 % über einen Festnetzanschluss, Quelle: Statistisches Jahrbuch 2007, Statistisches Bundesamt). Diese privaten Internetanschlüsse können für ein erfindungsgemäßes verteiltes System für ein Energie- und Versorgungsmanagement, z.B. zunächst nur für eine automatische Fernauslese (AMR), mitgenutzt werden und Kosten sparen. Die einen interaktiven Multi-Utility-Server (iMUS) aufweisende Server-Rechnereinheit S sammelt die Daten der z.B. als einfache, elektronische Haushaltszähler Z (smart meters) ausgebildeten Messgeräte M und überträgt die Daten auf Anfrage über das Kommunikationsnetzwerk N, das Internet, zur Client-Rechnereinheit C. Der Router RT ist als WLAN-Router ausgebildet.

Bei den Messgeräten M handelt es sich um einen Gaszähler Z, einen Wasserzähler Z und einen Stromzähler Z.

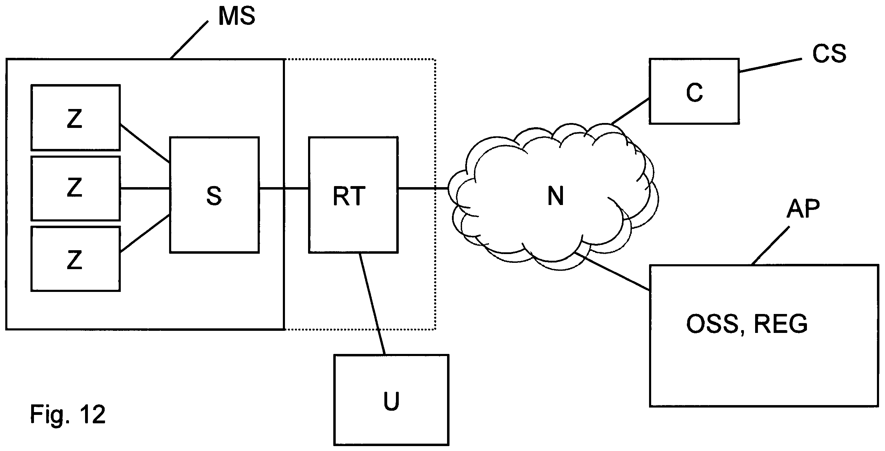

**Figur 12** zeigt eine Ausführungsform der in Figur 11 dargestellten Messstation. Die Server-Rechnereinheit S weist einen DSL-Anschluss auf und ist über den als DSL-Router ausgebildeten Router RT an das Kommunikationsnetzwerk N, das Internet, angeschlossen. Der DSL-Anschluss, und zwar der Router RT hat die Fähigkeit, Adressverwaltungskommandos des Session-Initiation-Protocols SIP zu verwenden.

Neben der Clientstation CS mit der Clientrechnereinheit C ist ein Anwendermodul AP mit einem Betriebsmodul OSS und einem SIP-Registrar REG an das Kommunikationsnetzwerk N angeschlossen. Ein SIP-Registrar REG ist eine Datenbank mit entsprechenden Programmen zum Lesen und Schreiben von SIP-relevanten Informationen.

Die Daten der hier als Zähler Z ausgebildeten Messgeräte M werden durch die Server-Rechnereinheit S ermittelt und als XML-Dokumente zur Verfügung gestellt. Zum Abrufen der Daten von der Server-Rechnereinheit S wird eine dynamisch wechselnde Adressierung über den DSL-Anschluss eingesetzt. Insbesondere werden die Daten von der Server-Rechnereinheit S über den als DSL-Router ausgebildeten Router abgerufen, wobei Adressverwaltungskommandos, d.h. entsprechende Protokollelemente und Funktionen, des Session-Initiation-Protocol SIP eingesetzt werden.

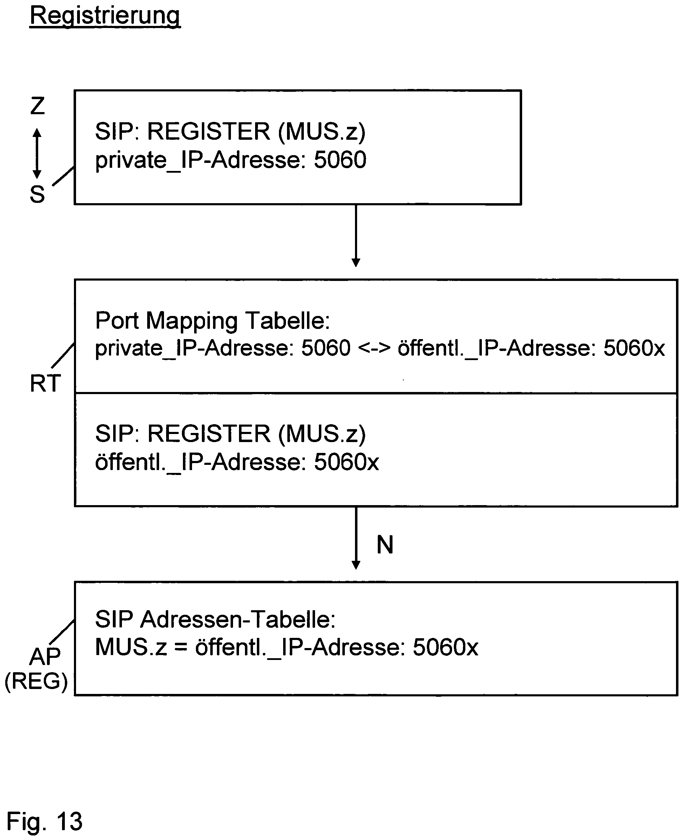

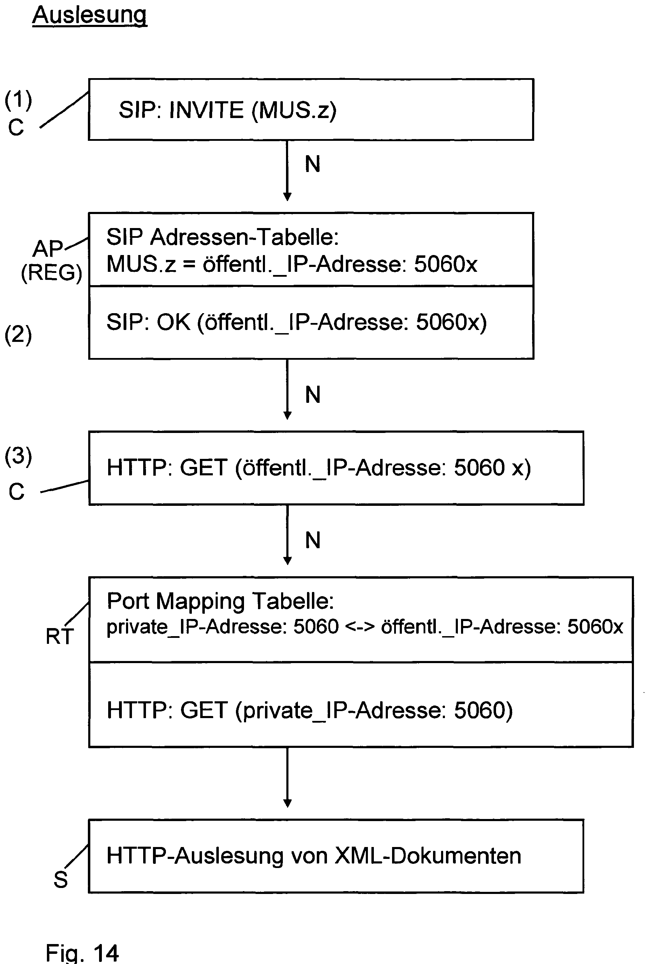

Eine Registrierung der Server-Rechnereinheit S mit den Zählern Z und ein Abrufen der aus den Zählern Z ermittelten Daten von der Server-Rechnereinheit S sind in den **Figuren 13** **und** **14** dargestellt. Zur Registrierung sendet die Server-Rechnereinheit S den SIP-Befehl REGISTER mit ihrem symbolischen Namen MUS.z und ihrer privaten IP-Adresse zum Router RT, der eine Port Mapping Tabelle führt, in der die privaten IP-Adressen öffentlichen IP-Adressen zugeordnet sind. Der Router RT leitet den SIP-Befehl REGISTER mit dem Namen MUS.z und der öffentlichen IP-Adresse an den SIP-Registrar REG des Anwendermoduls AP weiter. Der SIP-Registrar REG führt eine SIP Adressen Tabelle, in der die zugeleitete Zuordnung abgelegt wird.

Bei einer Anfrage eines Anwendermoduls AP zu Daten eines Zählers Z, die auf der Server-Rechnereinheit S mit dem Namen MUS.z zur Verfügung gestellt sind, an die Clientrechnereinheit C ermittelt diese zunächst mit dem SIP-Befehl INVITE bei dem SIP-Registrar REG die öffentliche IP-Adresse der Server-Rechnereinheit S, wobei der SIP-Registrar REG diese mit den SIP-Befehl OK zurückschickt. An diese Adresse leitet anschließend die Clientrechnereinheit C mit dem HTTP-Protokoll die Anfrage nach den Daten des Zählers Z zum Router RT weiter, der sie mit Hilfe der privaten IP-Adresse der Server-Rechnereinheit S an diese weitergibt. Die angefragten XML-Dokumente mit den Daten des Zählers Z, die die Server-Rechnereinheit S zur Verfügung gestellt hat, werden abgerufen und auf dem umgekehrten Weg über die Clientrechnereinheit C zum anfragenden Anwendermodul AP gesendet.

In einer Ausführungsform dieses erfindungsgemäßen verteilten Systems weisen viele der Messstationen MS Server-Rechnereinheiten S mit, ggf. bereits vorhandenen, DSL-Anschlüssen mit der Fähigkeit, Adressverwaltungskommandos des Session-Initiation-Protocols SIP zu verwenden, auf. Erfindungsgemäß wird über diese DSL-Anschlüsse zum Abrufen der Daten eine dynamisch wechselnde Adressierung der Server-Rechnereinheiten S eingesetzt. Dies ermöglicht eine einfache Realisierung einer dynamisch wechselnden Adressierung.

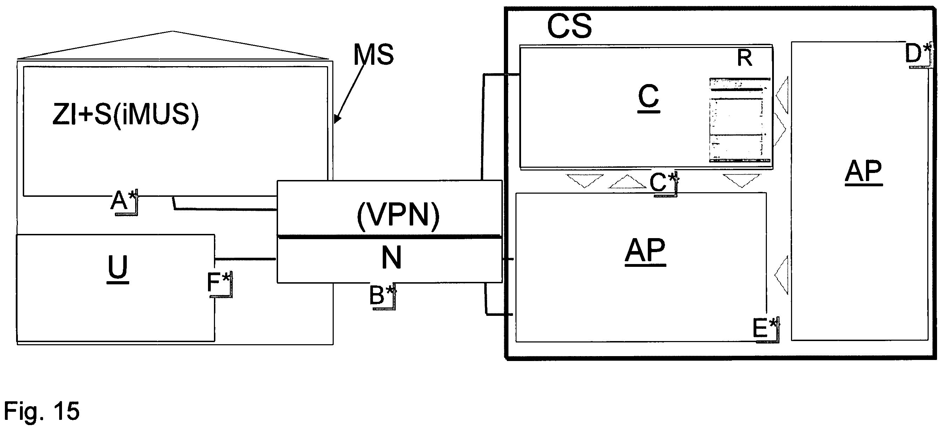

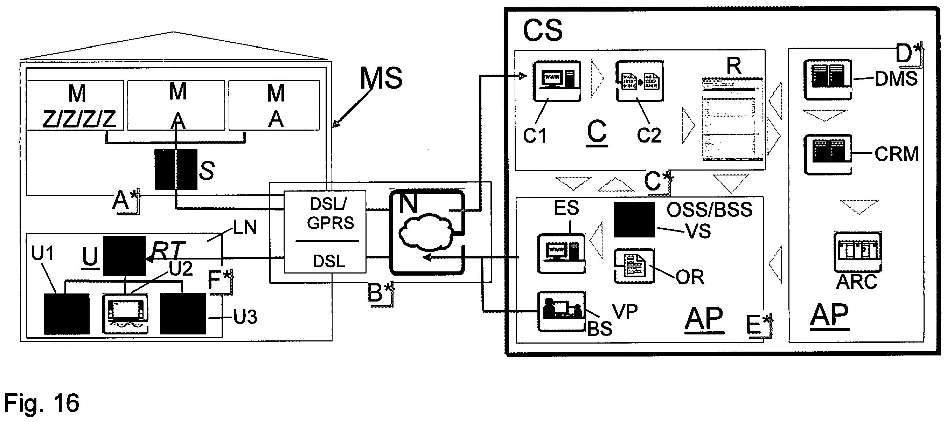

In den **Figuren 15** **und** **16****,** die den Figuren 7 und 8 mit Erläuterungen der Prioritätsanmeldung entsprechen, ist ein zweites erfindungsgemäßes verteiltes System dargestellt, wobei das verteilte System und das entsprechende Verfahren zum Ermitteln und Verwalten der Daten bis auf einige im Folgenden beschriebene alternative und/oder ergänzende Merkmale mit dem ersten verteilten System und mit seinem Verfahren übereinstimmen. Insbesondere zeigen die Figuren 15 und 16 die Architektur von Teilsystemen des nach dem invertierten Client-Server-Modell aufgebauten verteilten Systems anhand einer Messstation MS und einer Clientstation CS. In Figur 16 sind die Module und ihre Funktionen zu sehen. Das erfindungsgemäße System ist geeignet, eine automatische Zählerfernauslese (AMR) und weitere Dienstleistungen im häuslichen Bereich der Messstation MS (Home Services) durchzuführen.

Figur 15 zeigt eine von vielen Messstationen MS des verteilten Systems sowie einen Endnutzer U, die sich in räumlicher Nähe z.B. in einem Haushalt befinden. Die Messstation MS und der Endnutzer U sind über das Kommunikationsnetzwerk N, und zwar das Internet, mit der Clientstation CS verbunden.

Wie in Figur 16 zu sehen, umfasst die Messstation MS mehrere Messgeräte M und eine Server-Rechnereinheit S. Insbesondere umfasst die Messstation MS vier als einfache Haushaltszähler Z ausgebildete Messgeräte M für Strom, Wasser, Gas und Wärme sowie ein Haushaltsgerät A zur Messung und Steuerung der die Gesundheit beeinflussenden Bedingungen im Haushalt (health care), z.B. zur Messung von Vitaldaten, wie die Luftfeuchtigkeit, und ein Haushaltsgerät A zur Messung und Steuerung von z.B. Gebäudegeräten, wie Jalousien, (home care). Die Haushaltsgeräte A weisen Sensoren und Aktoren auf.

Die Server-Rechner-Einheit S umfasst mindestens einen Mikro-Server, der als interaktiver Mult-Utility-Server (iMUS) eingesetzt ist und an den die Messgeräte M angeschlossen sind. D.h. die Messstation MS weist ein durch die verschiedenen Messgeräte M und den o.g. Mikro-Server gebildetes Mess- und Steuersystem auf, in dem die Daten der Messgeräte M ermittelt und durch den Mikro-Server bearbeitet und zur Verfügung gestellt werden und die Messgeräte M und ggf. Zusatzgeräte durch den Mikro-Server gesteuert werden. Der netzwerkfähige Mikro-Server der Server-Rechnereinheit S ist an das Kommunikationsnetz N angeschlossen und verwendet einen DSL-Übertragungsdienst und/oder einen GPRS-Übertragungdienst.

Der Endnutzer U (home client) ist mit einer Rechnereinheit U1, z.B. mit einem PC mit einem Browser, mit einer Anzeigeeinheit U2 und mit einer Telefoneinheit U3 versehen, die über ein lokales Funknetz LN, z.B. WLAN, miteinander verbunden sind. Das örtliche Funknetz LN ist über einen Router RT, z.B. einen WLAN-Router, an das Kommunikationsnetz N angeschlossen.

Die in Figur 15 gezeigte Clientstation CS weist eine Client-Rechnereinheit C (AMR-Client) mit einem Systemdaten enthaltenen Datenmodul R (Repository) auf. In der Clientstation CS sind zwei Anwendermodule AP angeordnet, die mit der Clientstation CS und untereinander verbunden sind. Eines der beiden Anwendermodule AP ist an das Kommunikationsnetzwerk N angeschlossen.

Wie in Figur 16 gezeigt, weist die Client-Rechnereinheit C eine Empfangs- und Sendeeinheit C1 und eine Bearbeitungseinheit C2 zur Zusammenführung der Daten auf. Letztere ist mit dem Datenmodul R verbunden.

Eines der Anwendermodule AP, auch Anwenderplattform genannt, umfasst eine Dateneinheit zum Verwalten von Daten DMS (Datenmanagementsystem), eine Kundeneinheit mit Kundendaten CRM (Customer Relationship Management) und ein Archiv ARC, z.B. mit Formbriefen (Lettershop). Dieses erste Anwendermodul AP, und zwar die Dateneinheit DMS, ist mit der Client-Rechnereinheit C, und zwar mit dem Datenmodul R, verbunden.

Das zweite an das Kommunikationsnetzwerk angeschlossene Anwendermodul AP, auch öffentlicher Server genannt (Public Server, Web Service), umfasst ein als Betriebs- und Servicemodul ausgebildetes Modul OSS/BSS, das z.B. Verbrauchsstatistiken VS und Online Rechnungen OR erzeugt und seiner Empfangs- und Sendeeinheit ES zur Verfügung stellt. Das zweite Anwendermodul AP umfasst auch ein Nutzermodul VP mit einem Steuermodul, das einen Beratungsservice BS für den Endnutzer U zur Verfügung stellt.

Das Anwendermodul AP, z.B. sein Archiv ARC, ist mit dem zweiten Anwendermodul AP, z.B. mit dem Nutzermodul VP, verbunden.

Wesentlich ist, dass über das Kommunikationsnetzwerk N, nämlich über das Internet noch eine Verschlüsselung, ein sogenanntes (virtuelles privates) VP-Netzwerk VPN, gelegt ist. Dabei werden die Daten durch die Server-Rechnereinheit S verschlüsselt und die Client-Rechnereinheit C entschlüsselt.

Zur Ermittlung und Verwaltung der Daten aus einer Vielzahl von Messgeräten M, d.h. zur Realisierung einer automatischen Zählerfernauslese (AMR) und weiterer Dienstleistungen im häuslichen Bereich der Messstation MS (Home Services) sind in den Figuren 15 und 16 folgende Dienstleistungen als Bausteine angegeben:
- A*: Geräteanpassung; Messen/Steuern, Verschlüsseln,
- B*: Übertragung Client-Server Protokolle über IP,
- C*: Messdienste, Geräteüberwachung, Datensammlung,
- D*: Daten-, Kunden-, Energie- & Versorgungsmanagement,
- E*: verbraucher-orientierte Dienste,
- F*: Entertainment, Information & Telekommunikation,
die den Bausteinen A ff der Figuren 7 und 8 der Prioritätsanmeldung entsprechen.

Zum Ermitteln und Verwalten der Daten aus einer Vielzahl von Messgeräten M werden die Daten erfindungsgemäß in mehreren Messstationen MS aus mindestens einem Messgerät M ermittelt. Insbesondere werden die Daten in vielen Messstationen aus einer großen Zahl von als einfache Haushaltszähler Z und als Haushaltsgeräte A ausgebildeten Messgeräten (z.B. ca 10⁴ Messgeräten) ermittelt. Die ermittelten Daten werden in den Server-Rechnereinheiten S der Messstationen MS zu clientfähigen Daten bearbeitet und zur Verfügung gestellt. Dabei arbeiten die die Daten ermittelnden Mikro-Server S der Server-Rechnereinheiten parallel.

Bei der Bearbeitung durch die Server-Rechnereinheit S werden die ermittelten Daten als XML-Dokumente erstellt und gemäß den Regeln des VP-Netzwerkes verschlüsselt. Neben der Datenermittlung führt die Server-Rechnereinheit S Geräteanpassungen an den Messgeräten M durch und übermittelt an die Aktoren der als Haushaltsgeräte A ausgebildeten Messgeräte M Daten zum Steuern. Dies entspricht dem Baustein A*.

Die zur Verfügung gestellten verschlüsselten Daten aus den Messstationen MS werden über das Kommunikationsnetzwerk N, das Internet, in der Clientstation CS mit der Client-Rechnereinheit C mit Hilfe des Datenmoduls R, und zwar mit Hilfe von Systemdaten aus dem Datenmodul R, abgerufen. Als Übertragungsprotokolle werden Internetprotokolle verwendet. Die abgerufenen Daten werden weiterbearbeitet, z.B. entschlüsselt, bearbeitet und archiviert. Dies entspricht dem Baustein B*.

Auf Anfrage einer Anwenderprogrammeinheit eines Anwendermoduls AP werden durch die Client-Rechnereinheit C Daten von mindestens einer Server-Rechnereinheit S abgerufen und an die Anwenderprogrammeinheit des Anwendermoduls AP weitergeleitet.

Beispielsweise auf Anfrage des Moduls OSS/BSS des zweiten Anwendermoduls AP werden Verbrauchsdaten übermittelt und daraus in dem Modul OSS/BSS Verbrauchsstatistiken VS ermittelt. Die Verbrauchsdaten oder andere angefragte Daten werden zur Überwachung der Messgeräte M eingesetzt. Dies entspricht dem Baustein C*.

Je nach Art der angefragten Verbrauchsdaten und je nach Aufteilung der Verwaltung der ermittelten Daten können die Verbrauchsdaten von der Dateneinheit des Datenmoduls R oder direkt von der entsprechenden Server-Rechnereinheit S oder von dem ersten Anwendermodul AP übermittelt werden.

Auf Anfrage der Verwaltungseinheit DMS des ersten Anwendermoduls AP werden z.B. Messdaten einzelner Messgeräte M übermittelt und in der Verwaltungseinheit DMS bearbeitet. Messdaten aus der Verwaltungseinheit DMS, Kundendaten aus der Kundeneinheit CRM und Rechnungsformulare aus dem Archiv ARC werden z.B. in dem ersten Anwendermodul AP zusammengestellt. Dies entspricht dem Baustein D*.

Die Messdaten, Kundendaten und Rechnungsformulare des ersten Anwendermoduls AP werden, z.B. von dem Modul OSS/BSS des zweiten Anwendermoduls AP, angefragt, zu Online-Rechnungen verarbeitet und an den Endnutzer U versandt. Dies entspricht dem Baustein E*.

Auf Anfrage des Endnutzers U an das Nutzermodul VP des zweiten Anwendermoduls AP werden z.B. Daten von Sensoren der als Haushaltsgeräte A ausgebildeten Messgeräte M an den Endnutzer U übermittelt. Die Daten der Sensoren, die regelmäßig und/oder aktuell ermittelt, von der Server-Rechnereinheit bearbeitet und zur Verfügung gestellt werden, werden auf die Anfrage des Nutzermoduls VP von der Client-Rechnereinheit C mit Hilfe des Datenmoduls R abgefragt und übermittelt. Auf diesem Weg kann der Endnutzer auch die Aktoren seiner Haushaltgeräte A steuern. Zur Steuerung der Aktoren der Haushaltsgeräte A gibt der Endnutzer U z.B. die gewünschte Position des Aktors an. Diese Angabe wird im Steuermodul des Nutzermoduls VP in Daten zum Steuern des entsprechenden Aktors umgesetzt. Auf Anfrage des Steuermoduls leitet die Client-Rechnereinheit C die Daten zum Steuern an den Mikro-Server der Server-Rechnereinheit S weiter, die den Aktor des Haushaltsgerätes A bedient. Dies entspricht dem Baustein F*.

In einer Ausführungsform der Erfindung bedienen die Mikro-Server Sm, Si den relativ kleinen häuslichen Bereich, d.h. eine Messstation MS, mit Messgeräten M mit unterschiedlichen Verbrauchssensoren (z.B. Strom, Gas, Wasser) als Mess- und Steuersysteme. Sie dienen auch als Mittler zwischen der Nahfeld-Kommunikation und als Server-Komponente des gesamten Systems der Datenermittlung und -verwaltung ("Daten-Aggregation & Repository"). Diese Mikro-Server Sm, Si sind als "intermedial Multi Utility Server - iMUS" eingesetzt.

Es wird ein auf VPN-Technik beruhendes invertiertes Client-Server-System verwendet, welches zur performanten Erfüllung seiner Mess- und Steueraufgaben invertiert ist, d.h. viele Server werden durch einen Client abgefragt. Das Mess- und Steuersystem wird einerseits zum automatisierten Messen von Zählerdaten, andererseits auch zum Auslesen beliebiger Sensoren und Steuern beliebiger Aktoren in einem auf dem öffentlichen Internet basierenden Anschluss- und Netzwerktechnologie eingesetzt, d.h. es wird zum Auslesen und Steuern unterschiedlichster Messgeräte M eingesetzt.

Die beim Verbraucher (Nutzer), d.h. in einer Messstation MS, installierten Mikro-Server Sm, Si führen folgende Verfahren durch:
1) Auslesen der und ggf. Rückwirken auf den oder die angeschlossenen Messgeräte M, wie Elektrozähler, und auch "Multi-Utility Metering" - also Auslesen der und ggf. Rückwirken auf Messgeräte M anderer Energieformen und Verbrauchsmengen (Gas, Wärme, Wasser), d.h. Telemetrie ausschließlich im Nahbereich.
2) Konvertieren der ermittelten Daten und zur Verfügung stellen der ermittelten Daten, d.h. Konvertieren der Daten von der vielfältigen, teilweise proprietären Protokoll-Welt der Mess- und Steuertechnik auf die Standard-Protokoll-Welt des Internets; dazu gehören zum Beispiel als notwendige Netzwerk-Protokolle:
   ARP (Adress Resolution Protocol), ETHER (Ethernet Frame Handling) PPP (Point-To-Point Protocol mit LCP, CCP, PAP, CHAP), PPPoE (PPP over Ethernet), IPv4 (Internet Protocol mit ICMP, IGMP und Multicast Support), ROUTE (IP Routing Module), SOCKETS (TCP - Transport Control Protocol & UDP - Universal Datagram Protocol), USERAUTH (User-Name/Password Authorization Handling) und auch IPv6
   und zum Beispiel als notwendige Anwendungsprotokolle:
      FTPS (File Transfer Protocol Server), UPNP (Universal Plug & Play Device Service mit SOAP/XML), SMTP (eMail Client), gegebenenfalls POP3 (eMail Retrieval Client), SOCK (Stream Socket Library), SNTP (Simple Network Time Protocol mit SNMPTRAP), Syslog (System Logging over UDP) DHCP (Dynamic Host Configuration Protocol), RESOLVE (Domain Name Resolver), HTTPD (embedded Webserver / Hypertext Transport), gegebenenfalls auch NETCON (Telnet Console), PING (ICMP Echo Request Probe), SSDP (Simple Service Discovery Protocol)
3) Über die regulären Aufgaben eines Protokollumsetzers ("Protocol-Converter", "Gateway") hinaus, Bearbeiten der Daten, z.B. Speicherung der Daten bzw. Auswertung gemäß den in der Server-Applikation festgelegten Regeln (z.B. Aufstellung eins Tagesgangs oder Lastverteilung)
4) Bearbeiten der Daten, wie zeitliche Entzerrung zwischen Datenerzeugung und Datentransport (auch gegebenenfalls Ersatzwertbildung bei Zählerausfall)
5) Überwachung des gesamten im Haus (in der Messstation MS) befindlichen Mess- und Steuersystems auf betriebliche Stabilität und Manipulationssicherheit
6) Verschlüsselung der Kommunikation zwischen Messgeräten, wie Zählern und Mikro-Servern (falls notwendig) und zwischen Mikro-Servern Sm, Si und der Client-Rechnereinheit C bei Nutzung eines VPN über das Internet, d.h. Kommunikationsnetz N.

Diese Server-Applikationen und Netzwerkprotokolle sind auf den Mikro-Servern Sm, Si, d.h. auf den sogenannten iMUS (intermedial Multi Utility Server) implementiert.

Der bzw. die Mikro-Server Sm, Si mit dem jeweils relativ kleinen Beobachtungsraum zum Messen von Energie- und Versorgungsdaten einer Messstation MS, d.h. in einer Wohnung oder in einem Ein- oder Mehrfamilienhaus könnten mit einem Standardbrowser als Client-Rechnereinheit C abgefragt werden, wobei Zugriffsrechte aus Gründen des Datenschutzes und der Datensicherheit noch gesondert beachtet werden müssten.

Die Client-Rechnereinheit C, die als einzige "trusted Party" alle Mikro-Server Sm, Si abfragen kann, führt Folgende Verfahren durch:
1) Verwaltung eines Datenmoduls (Repository R), welches sämtliche Gerätedaten (Identifikatoren, Parameter, Lokalisation (Orts- und Datenadresse), Zugangsrechte, ...) und Messdaten enthält
2) Bearbeiten der Daten, wie Entschlüsselung und Aufnahme der von den Mikro-Servern Sm, Si zur Verfügung gestellten Messdaten (abrechnungsrelevant und/oder informativ) in dieses Repository R
3) Weitergabe der bearbeiteten Daten an dazu berechtigte Anwendermodulen AP, d.h. Programme bzw. Institutionen zur Rechnungslegung, zur aufgearbeiteten Darstellung der Verbrauchsdaten an die Verbraucher in einem gesonderten Web-Service, zur übergeordneten statistischen Aufarbeitung von Energie- und Versorgungsdaten, zum Geräte-Management der in den Haushalten verbauten Mess- und Steuersysteme und nach Installation von geeigneten Sensoren und Aktoren für Applikationen in den Bereichen "Home Care", "Facility Management" und gegebenenfalls "Health Care" z.B. zum Zwecke des "betreuten Wohnen"
4) Realisierung eines gemeinsamen Zeitbegriffs: die Verwendung von standardisierten Internet-Protokollen und die im statistischen Mittel extrem kurzen Übertragungszeiten auch in einem "best effort" VPN, welches allein durch das Verhalten der Client-Rechnereinheit C und möglicher Alarmmeldungen der Mikro-Server Sm, Si belastet wird, stellt sicher, dass die den Servern und Messeinrichtungen jeweils bekannte oder bekannt zu machende Zeit nur mit kleinen Abweichungen übereinstimmt. Jede Messung kann daher mit einem Zeitstempel versehen werden, der eine Systemzeit mit einer Genauigkeit mindestens im Bereich von Sekunden zeigt.

Mit Hilfe des von der Client-Rechnereinheit C an Anwendermodule AP, z.B. der ApplikationsPlattform abgegebenen Datensätzen, lassen sich nicht nur individuell für jeden Verbrauch abrechnungsrelevante Daten an die Energieerzeuger / -verteiler ermitteln bzw. Verbrauchsschwankungen und Grundlasten plausibel für den Verbraucher darstellen, sondern aus unterschiedlichen Akkumulationen etwa kurz- oder langfristige Prognosen ableiten, akkumulative Bilanzierungen und statistische Auswertungen überhaupt erst erstellen und gegebenenfalls auch leistungs- bzw. tarifabhängige Einflussnahme auf Geräte vornehmen.

Die Erfindung lässt optimal eine getrennte Implementierung der Rollen der von einem Elektroversorgungsunternehmen unabhängigen Messstellenbetreiber und Messdienstleister zu, wie sie im Energiewirtschaftsgesetz für die Zukunft vorgeschlagen wird. Das System ist in insoweit mandantenfähig, als dass z.B. unterschiedlichen Abrechnungsdienstleistern oder Elektroversorgungsunternehmen über "White Lists" nur und ausschließlich ihnen Zugang zu den Messstellen bzw. gemessenen Werten ihrer Kunden gewährt werden kann.

Ein alternatives erfindungsgemäßes Verfahren und ein entsprechendes verteiltes System ermöglicht die Durchführung eines Energie- und Versorgungsmanagement.

Es ermöglicht eine automatische Fernauslesung von Messgeräten M, insbesondere Haushaltszählern, (Automated Meter Reading - AMR), z.B. bei Tarifkunden, über Mikro-Server Sm, Si. Die Mikro-Server Sm, Si ermöglichen weitere Mess- und Steueraufgaben in den Messstationen MS in einem größeren Bereich.

Wesentliches ist die Verwendung eines invertierten Client-Server-Modells. Von großem Vorteil sind die Mikro-Server Sm und Si, die als kleine elektronische Bauteile eingebaut sind und die Server-Programme tragen. Die Server-Programme der Mikro-Server Sm, Si werden von dem autorisierten Client-Programm der Client-Rechnereinheit C angesteuert. Das Client-Programm bedient das in diesem Beispiel als Geräte- und Messdaten-Repository ausgebildete Datenmodul R der Clientstation CS und erlaubt ausschließlich autorisierten Anwendermodulen AP (z.B. Applikationen) einen Zugriff.

Die Definition der entsprechenden Aufgaben und technischen Anforderungen an das Virtual Private Network VPN erfolgt durch die Abstimmung der Client-Rechnereinheit C und der Server-Rechnereinheiten SI.

Die Implementierung eines invertierten Client-Server-Modells ermöglicht, extrem hohen Ansprüchen an Datensicherheit und Datenintegrität gerecht zu werden und das Gesamtsystem eichamtlich bzw. sicherheitstechnisch durch die entsprechenden Institutionen abnehmen zu lassen. Durch Authentifizierung nur eines möglichen Clients C bei einer großen Anzahl von Mikro-Servern Sm, Si, durch gesicherten Austausch von server- und daher verbraucherspezifischen "shared secrets" als Grundlage symmetrischer oder asymmetrischer (öffentlicher Schlüssel beim Server, privater Schlüssel beim Messdienstleister) wird ohne großen weiteren technischen Aufwand eine hohe Sicherheitsstufe realisiert, die Kommunikation über ein alle Server und einen Client umfassendes VPN als "demilitarisierte Zone" garantiert die Integrität von Quelle und Senke der Kommunikation und verhindert Manipulationen auch ohne zusätzlichen investiven und operativen Aufwand für "Intrusion-Detection-" und "Firewall"-Systeme.

Das Konzept eines intermedialen als Multi-Utility Server ausgebildeten Mikro-Servers Sm, Si am Ort der Zähler bzw. Messungen erlaubt die Anbindung neuer Zählertypen allein durch Einbindung eines spezifischen "Treibers" in dieses System. Der vom Server zu erbringende Dienst - das "Messen" kann weiterhin unterschiedslos vom Client - z.B. über HTTP-Requests - abgefragt werden. Lediglich der Messstellenbetreiber, nicht der Messdienstleister, muss die Spezifika der einzelnen Messstellen kennen und berücksichtigen. Insbesondere kann daher auch ein übergeordneter, einheitlicher Identifikator verwendet werden, unabhängig von Zählertyp oder herstellerspezifischer Seriennummer. Im Rahmen dieser Erfindung werden IPv6-Adressen (128 bit) verwendet, die zunächst nur als Identifikator aller physischen Komponenten, bei Umstellung des VPN bzw. Erweiterung von Home Networks" auf das Internet-Protokoll Version 6, auch als Zieladressen für standardisierte Internet-Dienste dienen.

Die Möglichkeit der Implementierung von spezifischen Regeln zur Speicherung von Daten im Mikro-Server Sm, Si und die Genauigkeit der Systemzeit erlauben die Implementierung auch von Stromzählern mit dem weitaus geringeren Komplexitätsgrad von z.B. Wasser- oder Wärmezählern. Stromverbrauch und (tageszeit- bzw. erzeugerabhängigem) Tarif müssen nicht im Zähler, sondern können zeitlich und örtlich abgekoppelt in speziellen Modulen der Applikationsplattform zueinander in Beziehung gesetzt werden. Ein zu entwickelnder einfacher Einheitszähler in Kombination mit der Erfindung stellt eine erhebliche Kostenreduktion für "Energie- und Versorgungsmanagement" im Massenmarkt dar.

Der modulare Aufbau des Gesamtsystems und die operative Autonomie der Teilsysteme mit standardisierten Internet-Protokollen als Schnittstellen ermöglicht nicht nur Kostenreduktion sondern auch eine weitgehende Modularisierung Ermittlungs- und Verwaltungsverfahren.

In kurzen Zeitabständen gewonnene Messdaten stellen an sich einen Wert da, wenn diese - wie durch die beschriebene Erfindung möglich - eindeutig einer Zeit, einem physischen Ort, einer Datenadresse und einem Zählpunkt zugeordnet und kurzfristig abgefragt werden können. Die Erfindung erlaubt über geeignete Web-Portale, die vom Client gespeist werden, den Energie-Produzenten, den Betreibern von Abrechnungsstellen, der Wohnungswirtschaft und den Stadtwerken und nicht zuletzt Energie-Beratern für Verbraucher auf Basis dieser Messdaten über das Internet kostengünstig Dienstleistungen anzubieten.

## Patentansprüche

1. Verfahren zum Ermitteln und Verwalten von Daten aus einer Vielzahl von Messgeräten (M) in einem verteilten System umfassend mehrere Messstationen (MS) mit jeweils mehreren Messgeräten (M) und einer Server-Recheneinheit (S), wobei die Server-Recheneinheit (S) mit einem Kommunikationsnetzwerk (N) verbunden ist, wobei Messwerte aus mindestens einem Messgerät (M) über das Kommunikationsnetzwerk (N) abrufbar sind,
wobei in mindestens einer Clientstation (CS) mit mindestens einer Client-Rechnereinheit (C), die durch die Server-Rechnereinheiten (S) der Messstationen (MS) abrufbar zur Verfügung gestellten Daten über ein Kommunikationsnetzwerk (N) abgerufen und weiter bearbeitet werden,
wobei die Messwerte in der Server-Rechnereinheit (S) zu clientfähigen Daten bearbeitet und zur Verfügung gestellt werden,
**dadurch gekennzeichnet,**
**dass** Server-Recheneinheit (S) zyklisch aktuelle Messwerte von der Messstation empfängt, welche die Server-Recheneinheit (S) nach der Bearbeitung zu clientfähigen Daten zum Abruf zur Verfügung stellt.

2. Verfahren nach Anspruch 1, **dadurch gekennzeichnet, dass** in jeder Server-Rechnereinheit (S) die Bearbeitung der Daten der Messgeräte (M) durch mindestens einen Mikro-Server (Sm, Si) durchgeführt wird.

3. Verfahren nach Anspruch 2, **dadurch gekennzeichnet, dass** die Messgeräte (M) und ggf. Zusatzgeräte durch die Mikro-Server (Sm, Si) gesteuert werden.

4. Verfahren nach Anspruch 2 oder 3, **dadurch gekennzeichnet, dass** Daten aus mindestens einem als einfacher Haushaltszähler (Z1 , Z2, Z) ausgebildeten Messgerät (M) ermittelt und durch einen Mikro-Server (Sm, Si) bearbeitet und zur Verfügung gestellt werden.

5. Verfahren nach einem der Ansprüche 2 bis 4, **dadurch gekennzeichnet, dass** Daten aus mindestens einem als Haushaltsgerät (A1, A2, A3, A4, A) mit mindestens einem Sensor ausgebildeten Messgerät (M) ermittelt und durch einen Mikro-Server (Sm, Si) bearbeitet und zur Verfügung gestellt werden.

6. Verfahren nach Anspruch 5, **dadurch gekennzeichnet, dass** Daten zum Steuern an mindestens ein als Haushaltsgerät (A3, A4, A) ausgebildetes Messgerät (M) mit einem Aktor oder an mindestens ein Zusatzgerät mit einem Aktor durch mindestens einen Mikro-Server (Sm, Si) übermittelt werden.

7. Verfahren nach einem der Ansprüche 1 bis 6, **dadurch gekennzeichnet, dass** die aus den Messgeräten ermittelten Daten in den Server-Rechnereinheiten (S) bei der Bearbeitung zu clientfähigen Daten als XML-Dokumente erstellt werden.

8. Verfahren nach einem der Ansprüche 1 bis 7, **dadurch gekennzeichnet, dass** in den Server-Rechnereinheiten (S) die ermittelten Daten verschlüsselt und in der Client-Rechnereinheit (C) entschlüsselt werden.

9. Verfahren nach einem der Ansprüche 1 bis 8, **dadurch gekennzeichnet, dass** die von den Server-Rechnereinheiten (S) zur Verfügung gestellten Daten durch die Client-Rechnereinheit (C) mit Hilfe eines Datenmoduls (R) abgerufen werden.

10. Verfahren nach einem der Ansprüche 1 bis 9, **dadurch gekennzeichnet, dass** Daten auf Anfrage von mindestens einem Anwendermodul (AP) durch die Client-Rechnereinheit (C) von mindestens einer Server-Rechnereinheit (S) abgerufen und an das Anwendermodul (AP) weitergeleitet werden.

11. Verfahren nach Anspruch 10, **dadurch gekennzeichnet, dass** Daten von mindestens einem Endnutzer (U) über mindestens ein Anwendermodul (AP) abgerufen werden.

12. Verfahren nach einem der Ansprüche 10 bis 11 , **dadurch gekennzeichnet, dass** Daten auf Anfrage von mindestens einem ein Steuermodul umfassenden Anwendermodul (AP) durch die Client-Rechnereinheit (C) an mindestens eine Server-Rechnereinheit (S) weitergeleitet werden.

13. Verfahren nach einem der Ansprüche 1 bis 12, **dadurch gekennzeichnet, dass** zum Abrufen der Daten von mindestens einer Server-Rechnereinheit (S) eine dynamisch wechselnde Adressierung eingesetzt wird, wobei die Adressierung über einen DSL-Anschluss mit der Fähigkeit, Adressverwaltungskommandos des Session-Initiation-Protocol (SIP) zu verwenden, durchgeführt wird.

14. Verteiltes System zum Ermitteln und Verwalten von Daten aus einer Vielzahl von Messgeräten (M) umfassend
- mehrere Messstationen (MS) mit jeweils mehreren Messgeräten (M) und einer Server-Recheneinheit (S),
- wobei die Server-Recheneinheit (S) mit einem Kommunikationsnetzwerk (N) verbunden ist,
- wobei die Server-Recheneinheit (S) zum Abruf der Messwerte aus mindestens einem Messgerät (M) eingerichtet ist,
- wobei die Server-Recheneinheit (S) eingerichtet ist, die Messwerte zu clientfähigen Daten zu bearbeiten und die clientfähigen Daten zur Verfügung zu stellen,
- mindestens eine Clientstation (CS), die eine Client-Rechnereinheit (C) umfasst, wobei die Client-Rechnereinheit (C) eingerichtet ist, die von Server-Rechnereinheiten (S) zur Verfügung gestellten Daten über das Kommunikationsnetzwerk (N) abzurufen,
**dadurch gekennzeichnet, dass** die Server-Recheneinheit (S) zum zyklischen Empfang aktueller Messwerte aus der Messstation eingerichtet ist, welche nach der Bearbeitung zu clientfähigen Daten in der Server-Recheneinheit (S) zum Abruf zur Verfügung stehen.

15. Verteiltes System nach Anspruch 14, **dadurch gekennzeichnet, dass** die Server-Rechnereinheit (S) mindestens einen Mikro-Server (Sm, Si) aufweist.

16. Verteiltes System nach Anspruch 15, **dadurch gekennzeichnet, dass** mindestens eines der Messgeräte (M) als einfacher Haushaltszähler (Z1 , Z2, Z) ausgebildet ist und an einen Mikro-Server (Sm, Si) angeschlossen ist.

17. Verteiltes System nach Anspruch 16, **dadurch gekennzeichnet, dass** mindestens eines der Messgeräte (M) als Haushaltsgerät (A1 , A2, A3, A4, A) mit mindestens einem Sensor ausgebildet ist und an einen Mikro-Server (Sm, Si) angeschlossen ist.

18. Verteiltes System nach Anspruch 17, **dadurch gekennzeichnet, dass** mindestens ein als Haushaltsgerät (A2, A3, A4, A) ausgebildetes Messgerät (M) oder ein Zusatzgerät mindestens einen Aktor aufweist und an einen Mikro-Server (Sm, Si) angeschlossen ist.

19. Verteiltes System nach Anspruch 14 **gekennzeichnet durch** ein der Client-Rechnereinheit (C) zugeordnetes Datenmodul (R).

20. Verteiltes System nach Anspruch 14 **gekennzeichnet durch** mindestens ein mit der Client-Rechnereinheit (C) verbundenes Anwendermodul (AP).

21. Verteiltes System nach Anspruch 20 **gekennzeichnet durch** mindestens ein Anwendermodul (AP), das von mindestens einem Endnutzer (U) abfragbar ist.

22. Verteiltes System nach Anspruch 20 **gekennzeichnet durch** mindestens ein Anwendermodul (AP), das mindestens ein Steuermodul umfasst.

23. Verteiltes System nach einem der Ansprüche 14 bis 22, **dadurch gekennzeichnet, dass** mindestens eine Server-Rechnereinheit (S) über einen DSL-Anschluss mit der Fähigkeit, Adressverwaltungskommandos des Session-Initiation-Protocols (SIP) zu verwenden, an das Kommunikationssystem (N) angeschlossen ist.

## Claims

1. A method for detecting and managing data from a plurality of measuring devices (M) in a distributed system comprising a plurality of measuring stations (MS) with in each case a plurality of measuring devices (M) and a server computer unit (S), wherein the server computer unit (S) is connected to a communication network (N), wherein measured values can be retrieved from at least one measuring device (M) via the communication network (N),
wherein in at least one client station (CS) with at least one client computer unit (C), the data made available by retrieval via the server computer units (S) of the measuring stations (MS) are retrieved via a communication network (N) and further processed,
wherein the measured values are processed in the server computer unit (S) into client-enabled data and made available,
**characterised in that**
the server computer unit (S) receives current measured values cyclically from the measuring station, which measured values the server computer unit (S) makes available for retrieval after processing into client-enabled data.

2. The method according to claim 1, **characterised in that**, in each server computer unit (S), the processing of the data of the measuring devices (M) is carried out by at least one micro-server (Sm, Si).

3. The method according to claim 2, **characterised in that** the measuring devices (M) and, as appropriate, auxiliary devices are controlled by the micro-servers (Sm, Si) .

4. The method according to claim 2 or 3, **characterised in that** data are detected from at least one measuring device (M) constituted as a simple domestic meter (Z1, Z2, Z) and processed by a micro-server (Sm, Si) and made available.

5. The method according to any one of claims 2 to 4, **characterised in that** data from at least one measuring device (M) constituted as a domestic device (A1, A2, A3, A4, A) with at least one sensor are detected and processed by a micro-server (Sm, Si) and made available.

6. The method according to claim 5, **characterised in that** data for controlling are transmitted by at least one micro-server (Sm, Si) to at least one measuring device (M) constituted as a domestic device (A3, A4, A) with an actuator or to at least one auxiliary device with an actuator.

7. The method according to any one of claims 1 to 6, **characterised in that** the data detected from the measuring devices are generated as XML documents in the server computer units (S) during the processing into client-enabled data.

8. The method according to any one of claims 1 to 7, **characterised in that** the detected data are encoded in the server computer units (S) and decoded in the client computer unit (C).

9. The method according to any one of claims 1 to 8, **characterised in that** the data made available by the server computer units (S) are retrieved by the client computer unit (C) with the aid of a data module (R).

10. The method according to any one of claims 1 to 9, **characterised in that** data, upon request by at least one user module (AP), are retrieved by the client computer unit (C) from at least one server computer unit (S) and routed to the user module (AP).

11. The method according to claim 10, **characterised in that** data are retrieved from at least one end user (U) via at least one user module (AP).

12. The method according to any one of claims 10 to 11, **characterised in that**, upon request from at least one user module (AP) comprising a control module, data are routed by the client computer unit (C) to at least one server computer unit (S).

13. The method according to any one of claims 1 to 12, **characterised in that**, for the retrieval of data from at least one server computer unit (S), dynamically changing addressing is used, wherein the addressing is carried out via a DSL connection with the capability of using address management commands of the session initiation protocol (SIP).

14. A distributed system for detecting and managing data from a plurality of measuring devices (M) comprising
- a plurality of measuring stations (MS) with in each case a plurality of measuring devices (M) and a server computer unit (S),
- wherein the server computer unit (S) is connected to a communication network (N),
- wherein the server computer unit (S) is configured to retrieve measured values from at least one measuring device (M),
- wherein the server computer unit (S) is configured to process the measured values into client-enabled data and to make the client-enabled data available,
- at least one client station (CS), which comprises a client computer unit (C), wherein the client computer unit (C) is configured to retrieve data made available by the server computer unit (S) via the communication network (N),
**characterised in that**
the server computer unit (S) is configured for the cyclical reception of current measured values from the measuring station, which after processing into client-enabled data in the server computer unit (S) are available for retrieval.

15. The distributed system according to claim 14, **characterised in that** the server computer unit (S) comprises at least one micro-server (Sm, Si).

16. The distributed system according to claim 15, **characterised in that** at least one of the measuring devices (M) is constituted as a simple domestic meter (Z1, Z2, Z) and is connected to a micro-server (Sm, Si) .

17. The distributed system according to claim 16, **characterised in that** at least one of the measuring devices (M) is constituted as a domestic device (A1, A2, A3, A4, A) with at least one sensor and is connected to a micro-server (Sm, Si).

18. The distributed system according to claim 17, **characterised in that** at least one measuring device (M) constituted as a domestic device (A2, A3, A4, A) or an auxiliary device comprises at least one actuator and is connected to a micro-server (Sm, Si).

19. The distributed system according to claim 14, **characterised by** a data module (R) assigned to the client computer unit (C).

20. The distributed system according to claim 14, **characterised by** at least one user module (AP) connected to the client computer unit (C).

21. The distributed system according to claim 20, **characterised by** at least one user module (AP) which can be interrogated by at least one end user (U).

22. The distributed system according to claim 20, **characterised by** at least one user module (AP) which comprises at least one control module.

23. The distributed system according to any one of claims 14 to 22, **characterised in that** at least one server computer unit (S) is connected to the communication system (N) via a DSL connection with the capability of using address management commands of the session initiation protocol (SIP).

## Revendications

1. Procédé de détermination et de gestion de données à partir d'une pluralité d'appareils de mesure (M) dans un système réparti comprenant plusieurs postes de mesure (MS) avec respectivement plusieurs appareils de mesure (M) et une unité de calcul de serveur (S), sachant que l'unité de calcul de serveur (S) est reliée à un réseau de télécommunication (R), sachant que les valeurs de mesure sont consultables à partir d'au moins un appareil de mesure (M) par le biais du réseau de télécommunication (N)
sachant que dans au moins un poste client (CS) avec au moins une unité de calcul client (C), les données mises à disposition de façon consultable par les unités de calcul de serveur (S) des postes de mesure (MS) sont consultées et ensuite traitées par le biais d'un réseau de télécommunication (N),
sachant que les valeurs de mesure sont traitées par rapport au données orientées client dans l'unité de calcul de serveur (S) et mises à disposition,
**caractérisé en ce que**
l'unité de calcul de serveur (S) reçoit de façon cyclique des valeurs de mesures actuelles du poste de mesure, que l'unité de calcul de serveur (S) met à disposition pour consultation après traitement par rapport aux données orientées client.

2. Procédé selon la revendication 1, **caractérisé en ce que** dans chaque unité de calcul de serveur (S), le traitement des données des appareils de mesure (M) est exécuté par au moins un micro-serveur (Sm, Si).

3. Procédé selon la revendication 2, **caractérisé en ce que** les appareils de mesure (M), et le cas échéant des appareils supplémentaires, sont commandés par le micro-serveur (Sm, Si).

4. Procédé selon la revendication 2 ou 3, **caractérisé en ce que** des données sont déterminées à partir d'au moins un appareil de mesure (M) constitué sous la forme d'un compteur domestique simple (Z1, Z2, Z) et sont mises à disposition une fois traitées par un micro-serveur (Sm, Si) .

5. Procédé selon l'une quelconque des revendications 2 à 4, **caractérisé en ce que** des données sont déterminées à partir d'au moins un appareil de mesure (M) constitué sous la forme d'un appareil ménager (A1, A2, A3, A4, A) avec au moins un capteur et sont traitées et mises à disposition par un micro-serveur (Sm, Si).

6. Procédé selon la revendication 5, **caractérisé en ce que** des données de commande sont transmises par au moins un micro-serveur (Sm, Si) à au moins un appareil de mesure (M) constitué sous la forme d'un appareil ménager (A3, A4, A) avec un actionneur ou à au moins un appareil supplémentaire avec un actionneur.

7. Procédé selon l'une quelconque des revendications 1 à 6, **caractérisé en ce que** les données déterminées à partir des appareils de mesure sont établies sous la forme de documents XML dans les unités de calcul de serveur (S) lors du traitement par rapport aux données orientées client.

8. Procédé selon l'une quelconque des revendications 1 à 7, **caractérisé en ce que** dans les unités de calcul de serveur (S), les données déterminées sont codées et décodées dans l'unité de calcul client (C).

9. Procédé selon l'une quelconque des revendications 1 à 8, **caractérisé en ce que** les données mises à disposition par les unités de calcul de serveur (S) sont consultées par l'unité de calcul client (C) à l'aide d'un module de données (R).

10. Procédé selon l'une quelconque des revendications 1 à 9, **caractérisé en ce que** des données sont consultées à la demande d'au moins un module d'utilisateur (AP) par l'unité de calcul de client (C) par au moins une unité de calcul de serveur (S) et sont transmises au module d'utilisateur (AP).

11. Procédé selon la revendication 10, **caractérisé en ce que** des données sont consultées par au moins un utilisateur final (U) par le biais d'au moins un module d'utilisateur (AP).

12. Procédé selon l'une quelconque des revendications 10 à 11, **caractérisé en ce que** des données sont transmises par l'unité de calcul de client (C) à au moins une unité de calcul de serveur (S) à la demande d'au moins un module d'utilisateur (AP) comprenant un module de commande.

13. Procédé selon l'une quelconque des revendications 1 à 12, **caractérisé en ce que** pour consulter les données d'au moins une unité de calcul de serveur (S), on utilise un adressage dynamiquement alternatif, sachant que l'adressage est exécuté par le biais d'une connexion DSL avec la capacité d'utiliser des commandes de gestions d'adresses du protocole d'initiation de session (PIS).

14. Système réparti de détermination et de gestion de données à partir d'une pluralité d'appareils de mesure (M) comprenant
- plusieurs postes de mesure (MS) avec respectivement plusieurs appareils de mesure (M) et une unité de calcul de serveur (S),
- sachant que l'unité de calcul de serveur (S) est reliée à un réseau de télécommunication (N),
- sachant que l'unité de calcul de serveur (S) est agencée pour la consultation des valeurs de mesure d'au moins un appareil de mesure (M),
- sachant que l'unité de calcul de serveur (S) est agencée pour traiter les valeurs de mesure par rapport aux données orientées client et mettre à disposition les données orientées client,
- au moins un poste client (CS), qui comprend l'unité de calcul client (C), sachant que l'unité de calcul client (R) est agencée pour consulter les données mises à disposition par les unités de calcul de serveur (S) par le biais du réseau de télécommunication (R),
**caractérisé en ce que**
l'unité de calcul de serveur (S) est agencée pour la réception cyclique des valeurs de mesure actuelles depuis le poste de mesure, lesquelles sont disponibles pour consultation dans l'unité de calcul de serveur (S) après le traitement par rapport aux données orientées client.

15. Système réparti selon la revendication 14, **caractérisé en ce que** l'unité de calcul de serveur (S) comporte au moins un micro-serveur (Sm, Si).

16. Système réparti selon la revendication 15, **caractérisé en ce qu'**au moins un des appareils de mesure (M) est constitué sous la forme d'un compteur domestique (Z1, Z2, Z) simple et est raccordé à un micro-serveur (Sm, Si) .

17. Système réparti selon la revendication 16, **caractérisé en ce qu'**au moins un des appareils de mesure (M) est constitué sous la forme d'un appareil ménager (A1, A2, A3, A4, A) avec au moins un capteur et est raccordé à un micro-serveur (Sm, Si).

18. Système réparti selon la revendication 17, **caractérisé en ce qu'**au moins un appareil de mesure (M) constitué sous la forme d'un appareil ménager (A2, A3, A4, A) ou un appareil supplémentaire comporte au moins un actionneur et est raccordé à un micro-serveur (Sm, Si).

19. Système réparti selon la revendication 14, **caractérisé par** un module de données (R) attribué à une unité de calcul client (C)

20. Système réparti selon la revendication 14, **caractérisé par** au moins un module d'utilisateur (AP) relié à l'unité de calcul client (C).

21. Système réparti selon la revendication 20, **caractérisé par** au moins un module d'utilisateur (AP), qui peut être consulté par au moins un utilisateur final (U).

22. Système réparti selon la revendication 20, **caractérisé par** au moins un module d'utilisateur (AP), qui comprend au moins un module de commande.

23. Système réparti selon l'une quelconque des revendications 14 à 22, **caractérisé en ce qu'** au moins une unité de calcul de serveur (S) est raccordée au système de télécommunication (R) par le biais d'une connexion DSL avec la capacité de commandes de gestion d'adresses du protocole d'initiation de session (PIS) à utiliser.
